(19) Europäisches Patentamt / European Patent Office / Office européen des brevets

(11) **EP 3 661 033 A1**

(12) **EUROPÄISCHE PATENTANMELDUNG**

(43) Veröffentlichungstag:
**03.06.2020 Patentblatt 2020/23**

(21) Anmeldenummer: **18208683.5**

(22) Anmeldetag: **27.11.2018**

(51) Int Cl.:
*H02K 41/03* (2006.01)     *B60L 13/03* (2006.01)
*B65G 49/08* (2006.01)     *B65G 54/02* (2006.01)
*B65G 1/00* (2006.01)      *H02K 15/00* (2006.01)
*H02K 15/03* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **B&R Industrial Automation GmbH
5142 Eggelsberg (AT)**

(72) Erfinder: **Weber, Andreas
5020 Salzburg (AT)**

(74) Vertreter: **Patentanwälte Pinter & Weiss OG
Prinz-Eugen-Straße 70
1040 Wien (AT)**

Bemerkungen:
Geänderte Patentansprüche gemäss Regel 137(2) EPÜ.

(54) **TRANSPORTEINRICHTUNG IN FORM EINES LANGSTATORLINEARMOTORS**

(57) Um eine Transporteinrichtungen (1) in Form eines Langstatorlinearmotors mit einer Transportstrecke (2), entlang der zumindest zwei Transporteinheiten (TEi) in Längsrichtung bewegbar sind anzugeben, die einen flexibleren Betrieb ermöglicht, ist erfindungsgemäß vorgesehen, dass die Magnetpole (5) der zumindest zwei Transporteinheiten (TEi) eine unterschiedliche Polteilung (TP) aufweisen.

Fig. 1

**Beschreibung**

Die Erfindung betrifft eine Transporteinrichtung in Form eines Langstatorlinearmotors mit einer Transportstrecke, entlang der zumindest zwei Transporteinheiten in Längsrichtung bewegbar sind, wobei an der Transportstrecke eine Mehrzahl von Antriebsspulen in Längsrichtung hintereinander angeordnet ist und an den Transporteinheiten jeweils eine Mehrzahl von Magnetpole in Längsrichtung mit einer bestimmten Polteilung hintereinander angeordnet ist, die mit den Antriebsspulen elektromagnetisch zusammenwirkt, um die Transporteinheiten zu bewegen, wobei jeder Magnetpol zumindest einen Permanentmagnet aufweist. Weiters betrifft die Erfindung eine Transporteinheit für eine Transporteinrichtung in Form eines Langstatorlinearmotors sowie eine Magnetisierungseinrichtung für eine Transporteinheit einer Transporteinrichtung in Form eines Langsgatorlinearmotors und ein Verfahren zum Betreiben einer Transporteinrichtung in Form eines Langsgatorlinearmotors.

Bei einem Langstatorlinearmotor ist eine Vielzahl von elektrischen Antriebsspulen, die den Stator bilden, nebeneinander entlang einer Transportstrecke ortsfest angeordnet. Auf einer Transporteinheit ist eine Anzahl von Antriebsmagneten, meist als Permanentmagnete oder als elektrische Spule angeordnet, die mit den Antriebsspulen zusammenwirken. Die (elektro)magnetischen Felder der Antriebsmagnete und der Antriebsspulen wirken zusammen, um eine Antriebskraft auf die Transporteinheit, die die Transporteinheit vorwärtsbewegt, zu erzeugen. Der Langstatorlinearmotor kann als Synchronmaschine, sowohl selbsterregt oder fremderregt, oder als Asynchronmaschine ausgeführt sein. Durch Ansteuerung der einzelnen Antriebsspulen, zur Regelung des magnetischen Flusses, wird die Größe der Antriebskraft beeinflusst und die Transporteinheit kann in gewünschter Weise entlang der Transportstrecke bewegt werden. Dabei ist es auch möglich, entlang der Transportstrecke eine Vielzahl von Transporteinheiten anzuordnen, deren Bewegungen einzeln und unabhängig voneinander kontrolliert werden können, indem die jeweils mit einer Transporteinheit zusammenwirkenden Antriebsspulen bestromt werden, in der Regel durch Anlegen einer elektrischen Spannung.

Die Antriebsspulen des Langstatorlinearmotors werden üblicherweise einzeln von Leistungselektronikeinheiten bestromt, indem die Leistungselektronikeinheiten an die Antriebsspulen die von der Regelung vorgegebenen Spulenspannungen anlegen. Die Leistungselektronikeinheiten sind natürlich auf einen maximalen Strom oder eine maximale Spannung ausgelegt, womit bei gegebenem konstruktiven Aufbau des Langstatorlinearmotors auch die erreichbare Antriebskraft und erreichbare Geschwindigkeit einer Transporteinheit vorgeben ist. Für einen großen Geschwindigkeitsbereich und eine hohe Antriebskraft müssen daher die Leistungselektronikeinheiten, aber auch die Antriebsspulen, entsprechend leistungsfähig ausgelegt sein. Bei der hohen Anzahl von Antriebsspulen und Leistungselektronikeinheiten eines Langstatorlinearmotors ist das natürlich mit hohem Aufwand und Kosten verbunden und daher in der Regel unerwünscht.

Ein Langstatorlinearmotor zeichnet sich insbesondere durch eine bessere und flexiblere Ausnützung über den gesamten Arbeitsbereich der Bewegung (Position, Geschwindigkeit, Beschleunigung), eine individuelle Regelung/Steuerung der Transporteinheiten entlang der Transportstrecke, eine verbesserte Energieausnützung, die Reduktion der Wartungskosten aufgrund der geringeren Anzahl an Verschleißteilen, einen einfachen Austausch der Transporteinheiten, effizientes Monitoring und Fehlerdetektion und eine Optimierung des Produktstromes entlang der Transportstrecke aus. Beispiele solcher Langstatorlinearmotoren können der WO 2013/143783 A1, der US 6,876,107 B2, der US 2013/0074724 A1 oder der WO 2004/103792 A1 entnommen werden.

Meist sind die Transporteinheiten einer Transporteinrichtung identisch ausgeführt, was den Vorteil hat, dass sie beispielsweise im Falle eines Defekts oder einer Wartung einfach austauschbar sind.

Die US 8,427,015 B2 und die US 8,674,561 B2 offenbaren Transporteinrichtungen in Form eines Langstatorlinearmotors, einmal in kernloser Ausführung und einmal mit Spulenkernen. Die Antriebspulen sind hier an der Transporteinheit angeordnet und die Permanentmagnete am Stator. Um Transporteinheiten mit unterschiedlich großer Schubkraft zu erreichen, deren Baulänge sich nicht wesentlich unterscheidet, wird vorgeschlagen, dass sich die Verhältnisse von Anzahl der Permanentmagnete zu Anzahl der Antriebsspulen einer Transporteinheit mit hoher Schubkraft und einer Transporteinheit mit geringer Schubkraft unterscheiden. Die Länge der Transporteinheiten ist abhängig von der Anzahl der Permanentmagnete, die mit den Antriebsspulen zusammenwirken. Nachteilig dabei ist einerseits, dass die Transporteinheiten eine Energieversorgung für die Antriebsspulen benötigen und dass unterschiedlich große Antriebsspulen für die unterschiedlichen Transporteinheiten notwendig sind, was sehr aufwändig ist.

Es ist deshalb eine Aufgabe der Erfindung, eine Transporteinrichtung in Form eines Langstatorlinearmotors anzugeben, die einen flexibleren Betrieb ermöglicht.

Erfindungsgemäß wird die Aufgabe dadurch gelöst, dass die Magnetpole der zumindest zwei Transporteinheiten eine unterschiedliche Polteilung aufweisen. Dadurch können an der Transportstrecke mehrere Transporteinheiten mit unterschiedlicher maximal erreichbarer Geschwindigkeit verwendet werden. Wird die Polteilung vergrößert, wird die Selbstinduktionsspannung an den Antriebsspulen verringert, wodurch die maximal erreichbare Geschwindigkeit erhöht wird und umgekehrt. Unter Umständen kann auch ein Feldschwächebetrieb des Langstatorlinearmotors berücksichtigt werden, mit dem das maximale erreichbare Geschwindigkeitsniveau zusätzlich vergrößert werden kann. Damit können unterschiedliche Maximalgeschwindigkeiten der Transporteinheiten bei definierter Belastung ermöglicht werden, im Wesentlichen ohne die energetischen Randbedingungen (maximaler Strom bzw. maximale Spannung der Leistungselektronikeinheiten) der Transporteinrichtung zu verändern.

Wenn die zumindest zwei Transporteinheiten eine unterschiedliche Anzahl von Magnetpolen aufweisen und/oder die Magnetpole der zumindest zwei Transporteinheiten eine unterschiedliche Polbreite aufweisen, kann die maximal erreichbare Antriebskraft der Transporteinheit beeinflusst werden.

Gemäß einer vorteilhaften Ausgestaltung der Erfindung ist vorgesehen, dass an zumindest einer Transporteinheit eine Anzahl der Magnetpole und/oder die Polteilung und/oder eine Polbreite der Magnetpole während der Bewegung der Transporteinheit entlang der Transportstrecke (2) und/oder im Stillstand veränderlich ist, wobei zur Veränderung der Anzahl der Magnetpole und/oder der Polteilung und/oder der Polbreite der Magnetpole vorzugsweise zumindest ein Permanentmagnet einer Transporteinheit auswechselbar ist. Dadurch können mehrere Transporteinheiten individuell an gewünschte Randbedingungen hinsichtlich erreichbarer Maximalgeschwindigkeit und Antriebskraft angepasst werden. Wenn die Veränderung während der Bewegung der Transporteinheit erfolgt ist es z.B. nicht erforderlich, die Transporteinheit zur Veränderung der erreichbaren Maximalgeschwindigkeit von der Transportstrecke zu entfernen, wodurch der Bewegungsablauf zeitlich optimiert werden kann. Die Veränderung kann aber auch im Stillstand erfolgen, beispielsweise indem die Transporteinheit von der Transportstrecke genommen wird.

Vorteilhafterweise ist zur Veränderung der Anzahl der Magnetpole und/oder der Polteilung und/oder der Polbreite der Magnetpole eine Magnetisierungseinrichtung in der Transporteinrichtung vorgesehen, mittels der magnetische Eigenschaften zumindest eines Permanentmagneten einer Transporteinheit veränderbar sind, wobei die Magnetisierungseinrichtung in der Transportstrecke der Transporteinrichtung integriert ist oder parallel zur Transportstrecke angeordnet ist. Dadurch kann die erreichbare Maximalgeschwindigkeit einfach und flexibel verändert werden.

Gemäß einer weiteren vorteilhaften Ausgestaltung der Erfindung ist vorgesehen, dass zur Veränderung der Polteilung der Magnetpole einer Transporteinheit eine Position zumindest eines Permanentmagneten in Längsrichtung der Transporteinheit mittels einer an der Transporteinheit angeordneten Verstelleinrichtung veränderbar ist. Dadurch kann beispielsweise eine mechanische oder elektromechanische Verstelleinrichtung vorgesehen werden, mit der die erreichbare Maximalgeschwindigkeit einfach und flexibel im Stillstand oder während der Bewegung verändert werden kann.

Vorzugsweise unterscheidet sich eine Spulenteilung der Antriebsspulen in Längsrichtung entlang der Transportstrecke von der Polteilung der Transporteinheiten, wobei die Spulenteilung vorzugsweise über die gesamte Transportstrecke konstant ist. Dadurch kann der negative Effekt des Einrastens (Cogging) vermieden werden.

Die Aufgabe wird weiters mit einer Transporteinheit gelöst, an der die Polteilung der Magnetpole der Transporteinheit veränderbar ist, wobei vorzugsweise eine Verstelleinrichtung an der Transporteinheit vorgesehen ist, mittels der eine Position zumindest eines der Permanentmagnete in Längsrichtung der Transporteinheit veränderbar ist, um die Poleteilung zu verändern. Besonders bevorzugt ist die Verstelleinrichtung mechanisch ausgeführt und weist ein Getriebe oder Gestänge und/oder zumindest ein Federelement zur Verstellung der Polteilung auf oder die Verstelleinrichtung ist elektromechanisch ausgeführt und weist zumindest ein elektromechanisches Stellglied und eine Steuereinheit zur Ansteuerung des Stellglieds auf, um die Polteilung zu verändern. Dadurch kann die Polteilung während der Bewegung der Transporteinheit oder im Stillstand, beispielsweise auch abseits der Transportstrecke verändert werden.

Vorteilhafterweise weist die Transporteinheit eine Auslöseeinheit zur Auslösung der Verstellung der Polteilung auf, wobei die Auslöseeinheit manuell oder von einer Betätigungseinheit einer Transporteinrichtung in Form eines Langstatorlinearmotors betätigbar ist. Damit ist es beispielsweise möglich, die Verstellung der Polteilung automatisch an einem bestimmten Punkt der Transportstrecke auszulösen.

Gemäß einer weiteren vorteilhaften Ausgestaltung ist zur Veränderung der Polteilung und/oder einer Anzahl der Magnetpole und/oder einer Polbreite der Magnetpole zumindest ein Permanentmagnet der Transporteinheit wechselbar und/oder die magnetischen Eigenschaften zumindest eines Permanentmagneten sind mittels einer Magnetisierungseinrichtung veränderbar. Dadurch wird eine alternative Möglichkeit zur Veränderung der Polteilung ohne komplexe Mechanik geschaffen und zusätzlich kann die Anzahl der Magnetpole und/oder die Polbreite verändert werden, wodurch die maximale Antriebskraft beeinflusst werden kann.

Die Aufgabe wird weiters mit einer Magnetisierungseinrichtung gelöst, die eine Magnetisierungseinheit und eine Magnetisierungssteuereinheit aufweist, wobei die Magnetisierungseinheit vorgesehen ist, ein magnetisches Feld zu erzeugen, um die magnetischen Eigenschaften zumindest eines Permanentmagneten der Transporteinheit zu verändern, um die Polteilung der Magnetpole zu verändern, wobei die Magnetisierungssteuereinheit zur Ansteuerung der Magnetisierungseinheit vorgesehen ist. Vorzugsweise ist die Magnetisierungseinheit zusätzlich dazu vorgesehen, ein magnetisches Feld zu erzeugen, um magnetische Eigenschaften zumindest eines Permanentmagneten der Transporteinheit zu verändern, um eine Anzahl der Magnetpole und/oder eine Polbreite zu verändern.

Vorzugsweise weist die Magnetisierungseinheit zur Erzeugung des magnetischen Feldes zumindest eine Magnetisierungsspule auf, die vorzugsweise eine Magnetisierungsspulenbreite aufweist, die einer Magnetbreite eines Permanentmagnet der Transporteinheit oder einem ganzzahligen Vielfachen der Magnetbreite eines Permanentmagnet der Transporteinheit entspricht. Dadurch können z.B. mit nur einer Magnetisierungsspulenbreite gezielt die magnetischen Eigenschaften mehrerer Permanentmagnete hintereinander verändert werden.

Vorteilhafterweise ist die die Magnetisierungseinrichtung in einer Transportstrecke einer Transporteinrichtung in Form eines Langsgatorlinearmotors integriert, wobei zumindest eine der Antriebsspulen der Transportstrecke als Magnetisierungsspule der Magnetisierungseinheit ausgebildet ist oder die Magnetisierungseinrichtung ist parallel zu einer Transportstrecke einer Transporteinrichtung in Form eines Langsgatorlinearmotors angeordnet, wobei die Magnetisierungseinrichtung ortsfest oder relativ zur Transportstrecke bewegbar ist, um die magnetischen Eigenschaften zumindest eines Permanentmagneten der Transporteinheit im Stillstand oder während der Bewegung der Transporteinheit zu verändern.

Die Aufgabe wird außerdem mit dem eingangs genannten Verfahren gelöst, wobei in der Transporteinrichtung zumindest zwei Transporteinheiten verwendet werden, deren Magnetpole eine unterschiedliche Polteilung aufweisen.

Besonders bevorzugt wird an zumindest einer Transporteinheit die Polteilung und/oder eine Anzahl der Magnetpole und/oder eine Polbreite der Magnetpole während der Bewegung der Transporteinheit entlang der Transportstrecke und/oder im Stillstand verändert.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt

Fig.1 eine Transporteinrichtung in Form eines Langstatorlinearmotors,

Fig.2a-2b eine Transporteinheit mit mechanisch verstellbaren Magnetpolen,

Fig.3a-d eine Transporteinheit mit verschiedenen Polteilungen,

Fig.4 eine Magnetisierungseinrichtung an einer Transportstrecke.

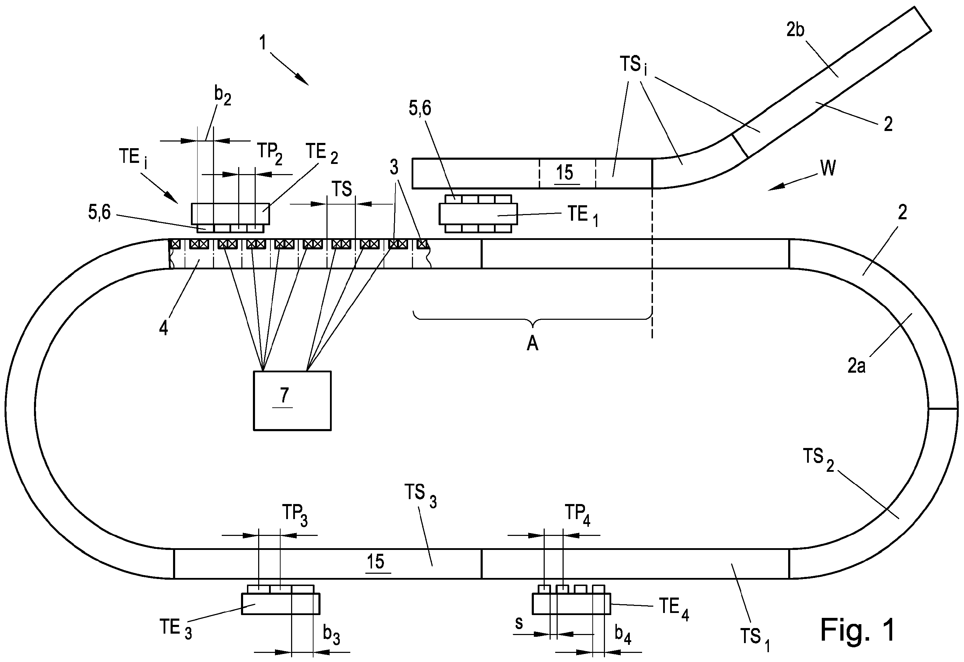

In Fig.1 ist eine erfindungsgemäße Transporteinrichtung 1 in Form eines Langstatorlinearmotors dargestellt. Die Transporteinrichtung weist in bekannter Weise eine Transportstrecke 2 auf, entlang der mehrere Transporteinheiten TEi bewegbar sind (der Index i steht für die jeweilige Transporteinheit TE1-TEi). Die Transportstrecke 2 bildet den Stator des Langstatorlinearmotors aus und weist eine Vielzahl von Antriebsspulen 3 auf, die in Längsrichtung hintereinander angeordnet sind. Die Transportstrecke 2 kann, so wie im dargestellten Beispiel, auch mehrere Transportsegmente TSi aufweisen, an denen jeweils mehrere Antriebsspulen 3 angeordnet sind. Dadurch wird ein modularer Aufbau ermöglicht und es können aus wenigen standardisierten Transportsegmenten TSi Transportstrecken 2 mit verschiedensten Geometrien aufgebaut werden. Beispielhaft sind in Fig.1 ein gerades Transportsegment TS1 und ein gekrümmtes Transportsegment TS2 dargestellt. Ein solcher modularer Aufbau ist im Stand der Technik bekannt und es wären natürlich auch andere Ausgestaltungen von Transportstrecke 2 oder Transportsegmenten TSi denkbar.

Die Antriebsspulen 3 sind in der Regel in einem konstanten Abstand, der sogenannten Spulenteilung $T_S$ in Längsrichtung voneinander beabstandet an der Transportstrecke 2 angeordnet, wobei sich die Spulenteilung TS auf den Abstand der Spulenachsen bezieht. Die Spulenteilung TS ist in der Regel über die gesamte Transportstrecke 2 konstant, um ein möglichst gleichmäßiges Magnetfeld in Längsrichtung zu erzeugen. Im gezeigten Beispiel sind die Antriebsspulen 3 auf Zähnen eines ferromagnetischen Kerns 4 (beispielsweise ein Eisen Blechpaket) angeordnet. Die Antriebsspulen 3 könnten aber auch kernlos ausgeführt sein. Die Transporteinheiten TEi weisen jeweils eine Mehrzahl von Magnetpolen 5 auf, die in Längsrichtung gesehen in einer sogenannten Polteilung $T_P$ voneinander beabstandet sind, wobei sich die Polteilung TP jeweils auf die Mitte eines Magnetpols 5 (in Längsrichtung gesehen) bezieht. Ein Magnetpol 5 weist dabei zumindest einen Permanentmagnet 6 auf, kann natürlich aber auch mehrere nebeneinander angeordnete Permanentmagnete 6 mit einer gleichgerichteten Magnetisierung, also gleicher Polung aufweisen, wie nachfolgend noch im Detail erläutert wird.

Zwischen den Transporteinheiten TEi und den Antriebsspulen 3 der Transportstrecke 2 ist in bekannter Weise ein Luftspalt vorgesehen, wie in Fig.1 angedeutet. Um den Luftspalt entlang der gesamten Transportstrecke 2 möglichst konstant zu halten ist in der Regel auch eine (nicht dargestellte) Führungseinrichtung zur Führung der Transporteinheiten TEi an der Transportstrecke 2 vorgesehen. Eine solche Führungseinrichtung ist nicht zwingend erforderlich, ist aber neben der Aufrechterhaltung des Luftspaltes vorteilhaft, um zu gewährleisten, dass die Transporteinheiten TEi, insbesondere in Kurven, nicht von der Transportstrecke 2 fallen. Beispielsweise könnte an der Transportstrecke 2 eine Führungsschiene vorgesehen sein und an den Transporteinheiten TEi könnten darin geführte Rollen vorgesehen sein. Solche Führungen mit verschiedenen Führungselementen, wie Rollen, Räder, Gleitflächen, Magnete, usw., sind bekannt, weshalb an dieser Stelle nicht näher darauf eingegangen wird.

Die Transportstrecke 2 könnte natürlich auch ganz oder teilweise in Form einer sogenannten Doppelkamm-Ausführung ausgeführt sein, wie beispielhaft anhand des Transportstreckenabschnitts A in Fig.1 gezeigt ist. Die Transportstrecke 2 weist hier in Querrichtung (quer zur Längsrichtung) voneinander beabstandete Transportstreckenabschnitte 2a, 2b auf, zwischen denen die Transporteinheiten TEi bewegbar sind. Der Transportstreckenabschnitt 2a verläuft hier im Streckenabschnitt A parallel zum zweiten Transportstreckenabschnitt 2b, der hier geschlossen ausgeführt ist. Im Bereich einer Weiche W divergieren die beiden Transportstreckenabschnitte 2a, 2b, wobei die Transporteinheiten TEi in der Weiche W je nach Bewegungsrichtung vom ersten Transportstreckenabschnitt 2a auf den zweiten Transportstreckenabschnitt 2b übergeben werden kann oder umgekehrt. Im Bereich des Doppelkamms (Transportstreckenabschnitt A) können natürlich wiederum Antriebsspulen 3 am zweiten Transportstreckenabschnitt 2a angeordnet sein, die mit Magnetpolen 5 der Transporteinheiten TEi zusammenwirken, die vorzugsweise in Querrichtung beidseitig an den Transporteinheiten TEi vorgesehen sind, wie beispielhaft für die Transporteinheit TE1 dargestellt ist. Der Vorteil der Doppelkamm-Ausführung ist beispielsweise, dass eine höhere Antriebskraft auf die Transporteinheit TE1 ausgeübt werden kann, weil beidseitig der Transporteinheit TE1 Magnetpole 5 mit Antriebsspulen 3 zusammenwirken, was z.B. zum Bewegen schwerer Lasten oder bei Steigungen oder großen Beschleunigungen erforderlich oder vorteilhaft sein kann. Wenn eine Transporteinheit TEi nur an einer Seite Magnetpole 5 aufweist, wie die restlichen dargestellten Transporteinheiten TEi, kann beispielsweise nur die Führungseinrichtung des zweiten Transportstreckenabschnitts 2a zur zusätzlichen Führung der Transporteinheit TEi genutzt werden, ohne Erzeugung einer zusätzlichen Antriebskraft.

Die Steuerung der Bewegung der Transporteinheiten TEi erfolgt in der Regel über eine oder mehrere Regelungseinheit(en) 7 (Hardware und/oder Software), welche die Antriebsspulen 3 entsprechend eines gewünschten Bewegungsablaufs ansteuert oder regelt. Dazu kann ein bestimmter Soll-Bewegungsablauf in Form von Sollwerten vorgegeben werden, beispielsweise eine bestimmte Soll-Position und/oder Soll-Geschwindigkeit und/oder Soll-Beschleunigung einer Transporteinheit TEi. Die Regelungseinheit 7 versorgt die Antriebsspulen 3 mit einer entsprechenden Spannung und/oder einem Strom, um die vorgegebenen Sollwerte einzuhalten bzw. zu erreichen. Im Wesentlichen werden die Antriebsspulen 3 so mit Spannung/Strom versorgt, dass ein in Längsrichtung relativ zur Transportstrecke 2 bewegtes Magnetfeld von den Antriebsspulen 3 erzeugt wird, welches mit den Magnetpolen 5 zusammenwirkt, um die Transporteinheiten 5 zu bewegen. Natürlich können an der Transportstrecke 2 (oder den Transporteinheiten TEi) auch für die Regelung erforderliche (nicht dargestellte) Sensoren zur Erfassung von Istwerten vorgesehen sein, z.B. einer Ist-Position oder Ist-Geschwindigkeit. Im einfachsten Fall kann aber statt einer Regelung (Feedback control) auch eine reine Steuerung (Feedforward control) verwendet werden, beispielsweise dann, wenn die Randbedingungen und Einflussfaktoren der Bewegung bekannt sind (z.B. bekannter festgelegter Bewegungsablauf der Transporteinheiten TEi, bekannte transportierte Last, etc.).

Wie eingangs erwähnt, ist die maximal erzielbare Geschwindigkeit einer Transporteinheit TEi bei vorgegebenem konstruktivem Aufbau der Transporteinrichtung 1 im Wesentlichen durch eine maximale Spulenspannung und/oder einen maximalen Spulenstrom begrenzt, der von einer Leistungselektronik an die Antriebsspulen 3 anlegbar ist. Die maximale Spulenspannung oder der maximale Spulenstrom ist üblicherweise durch die konstruktive Auslegung der Transporteinrichtung 1 und insbesondere der Leistungselektronik der Antriebsspulen 3 vorgegeben und kann oder sollte nicht überschritten werden, um die Antriebsspulen 3 und die Leistungselektronik nicht zu beschädigen. Um an der Transporteinrichtung 1 dennoch selektiv unterschiedliche erreichbare Maximalgeschwindigkeiten bei gegebener Belastung der Transporteinheiten TEi zu ermöglichen, ist erfindungsgemäß vorgesehen, dass die Magnetpole 5 der zumindest zwei Transporteinheiten TEi eine unterschiedliche Polteilung TP aufweisen, wobei die Polteilung TP aller Magnetpole 5 einer Transporteinheit TEi vorzugsweise konstant ist. Durch Variation der Polteilung TP kann die erreichbare Maximalgeschwindigkeit der Transporteinheiten TEi beeinflusst werden. Grundsätzlich gilt in der Regel, je größer die Polteilung TP ist, desto höher ist die erreichbare Maximalgeschwindigkeit bei definierter Belastung der Transporteinheit TEi und umgekehrt Dabei ist aber ggf. der bekannte Feldschwächebetrieb des Langstatorlinearmotors zu berücksichtigen, mit dem die erreichbare Maximalgeschwindigkeit bei definierter Belastung der Transporteinheit TEi noch weiter erhöht werden kann. Unter Umständen kann sich also ein gewisser Überschneidungsbereich ergeben, in dem eine Transporteinheit TEi mit kleinerer Polteilung TP im Feldschwächebetrieb eine höhere Maximalgeschwindigkeit erreichen kann als mit relativ dazu größerer Polteilung TP ohne Feldschwächebetrieb. Wenn man allerdings die Transporteinheit TEi mit unterschiedlicher Polteilung TP jeweils im Feldschwächebetrieb betreibt, wird die Transporteinheit TEi mit der größeren Polteilung TP im Allgemeinen die höhere Maximalgeschwindigkeit bei definierter Belastung erreichen. Durch die Erhöhung der Polteilung TP kann im Bereich der Spannungsbegrenzung bei gleicher Geschwindigkeit der Transporteinheit TEi ein höherer Strom in die Antriebsspulen 3 eingeprägt werden als bei kleinerer Polteilung TP.

Das ergibt sich aus dem nachstehenden formelmäßigen Zusammenhang.

$$U = R * i + j * \omega * L * i + \omega * \Psi_P$$

Dabei ist U die an die Antriebsspulen 3 angelegte Spulenspannung, ω die Frequenz, I die Induktivität der Antriebsspulen 3, i der Spulenstrom, R der elektrische Widerstand und $\Psi_P$ der verkettete magnetische Fluss. Der erste Spannungsterm (R*i) ist proportional dem Spulenstrom i und kann für die gegenständlichen Betrachtungen vernachlässigt werden. Der erste Spannungsterm wird im Leerlauf (Strom i=0) zu Null. Der zweite Spannungsterm (j*ω*l*i) entspricht der sogenannten Selbstinduktionsspannung und wird im Leerlauf (Last bzw. Spulenstrom i = 0) des Langstatorlinearmotors ebenfalls zu Null. Der dritte Spannungsterm (ω*$\Psi_P$) entspricht der sogenannten Gegeninduktionsspannung, welche unabhängig vom eingeprägten Spulenstrom i ist. Die Gegeninduktionsspannung ist für den Leerlauf die maßgebende Größe.

Wenn die Polteilung TP erhöht wird, verringert sich dadurch die Frequenz ω. Im Normalbetrieb (bei einer bestimmten Last) bedeutet das, dass der zweite Spannungsterm (j*ω*l*i) aufgrund der geringeren Frequenz ω kleiner wird, wodurch ein höherer Strom i in die Antriebsspulen 3 eingeprägt werden kann. Dadurch kann beispielsweise bei gleicher Geschwindigkeit einer Transporteinheit TEi bei größerer Polteilung TP eine größere Antriebskraft erzeugt werden, als bei kleinerer Polteilung TP. Andererseits kann dieser Stromvorteil aber auch dazu genützt werden, um die Transporteinheit TEi im Feldschwächebetrieb zu betreiben und damit die erreichbare Maximalgeschwindigkeit bei definierter Belastung zu erhöhen. Wird die Transporteinheit TEi jedoch nicht im Feldschwächebetrieb betrieben, so ist in der Regel die Leerlaufgeschwindigkeit bei größerer Polteilung TP geringer als bei kleinerer Polteilung TP (unter der Leerlaufgeschwindigkeit ist analog der Leerlaufdrehzahl beim rotativen Elektromotor jene Geschwindigkeit zu verstehen, bei der die Last bzw. der Strom i Null ist). Dies kann dadurch erklärt werden, dass durch die Erhöhung der Polteilung TP in der Regel auch der magnetische Fluss $\Psi_P$ steigt, wodurch unter Umständen die Verringerung der Frequenz ω ganz oder teilweise kompensiert oder überkompensiert werden kann.

Zusammengefasst bedeutet das, dass im Rahmen der Erfindung durch eine Erhöhung der Polteilung TP unter bestimmten Voraussetzungen die Maximalgeschwindigkeit der Transporteinheit TEi erhöht werden kann. Allerdings ist zu beachten, dass dies in der Regel unter anderem zu einer reduzierten Positionsgenauigkeit der Transporteinheit TEi führen kann.

An der in Fig.1 dargestellten Transporteinrichtung 1 sind eine zweite Transporteinheit TE2 mit einer Anzahl $j_2$=4 Magnetpolen 5 und eine dritte Transporteinheit TE3 mit einer Anzahl von $j_3$=3 Magnetpolen 5 dargestellt. Die Magnetpole 5 der zweiten Transporteinheit TE2 weisen eine zweite Polteilung $TP_2$ auf und die Magnetpole 5 der dritten Transporteinheit TE3 eine dritte Polteilung $TP_3$ auf, die größer ist als die zweite Polteilung $TP_2$. Bei vorgegebener konstanter Spulenteilung TS der Antriebsspulen 3 der Transportstrecke 2 und vorgegebenen energetischen und konstruktiven Randbedingungen (maximaler Spulenstrom, maximale Spulenspannung, konstanter Luftspalt) ist dadurch die erreichbare Maximalgeschwindigkeit der dritten Transporteinheit TE3 bei gegebener gleicher Belastung in der Regel größer als jene der zweiten Transporteinheit TE2 (ggf. unter Berücksichtigung des Feldschwächebetriebs). Eine Erhöhung der Anzahl j von Magnetpolen 5 einer Transporteinheit TEi (bei gleicher Polteilung TP) hat im Wesentlichen keinen Einfluss auf die jeweils erreichbare Maximalgeschwindigkeit der Transporteinheit TEi, sie beeinflusst allerdings die maximal erreichbare Antriebskraft der jeweiligen Transporteinheit TEi. Bei gegebener konstruktiver Ausgestaltung der Magnetpole 5 (z.B. hinsichtlich ihrer magnetischen Feldstärke, Polbreite b, Polteilung TP) kann folglich bei Erhöhung der Anzahl j von Magnetpolen 5 die maximale Antriebskraft bei gleichbleibender Maximalgeschwindigkeit erhöht werden und umgekehrt.

Die Polbreite b eines Magnetpols 5 wird bei gegebener Polteilung TP vorteilhafterweise so gewählt, dass zwischen zwei angrenzenden Magnetpolen 5 möglichst kein Spalt auftritt oder dass ein allfälliger konstruktionsbedingter Spalt zwischen Magnetpolen 5 minimiert wird. Die Polbreite b entspricht dann im Wesentlichen der Polteilung TP und die Längserstreckung L aller Magnetpole 5 einer Transporteinheit TEi entspricht im Wesentlichen der Summe der Polbreiten b der Magnetpole 5, allgemein L=∑b*j. Beispielsweise könnten zwei Transporteinheiten TEi eine im Wesentlichen gleich große Längserstreckung L der Magnetpole 5 aufweisen, aber mit einer unterschiedlichen Anzahl j an Magnetpolen 5 und einer unterschiedlichen Polteilung TP, so wie anhand der zweiten und dritten Transporteinheiten TE2, TE3 in Fig.1 dargestellt ist. An der zweiten Transporteinheit TE2 sind j=4 Magnetpole 5 mit einer konstanten Polteilung $TP_2$ vorgesehen, mit der Längserstreckung $L_2$ = 4*$T_{P2}$. An der dritten Transporteinheit TE3 sind j=3 Magnetpole 5 mit einer konstanten Polteilung $TP_3$ vorgesehen, mit der Längserstreckung $L_3$ = 3*$T_{P3}$, wobei $L_2$ = $L_3$ ist. Wenn die Magnetpole 5 einer Transporteinheit TEi durch einen Spalt mit der Spaltbreite s voneinander beabstandet sind, ergibt sich die Längserstreckung L aus der Summe der Polbreiten b und der Summe der Spaltbreiten s zu L=∑b+∑s.

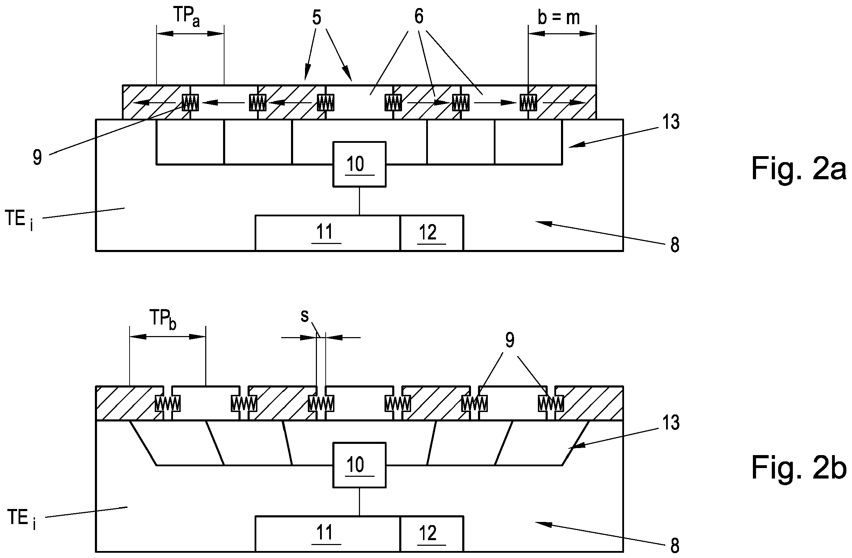

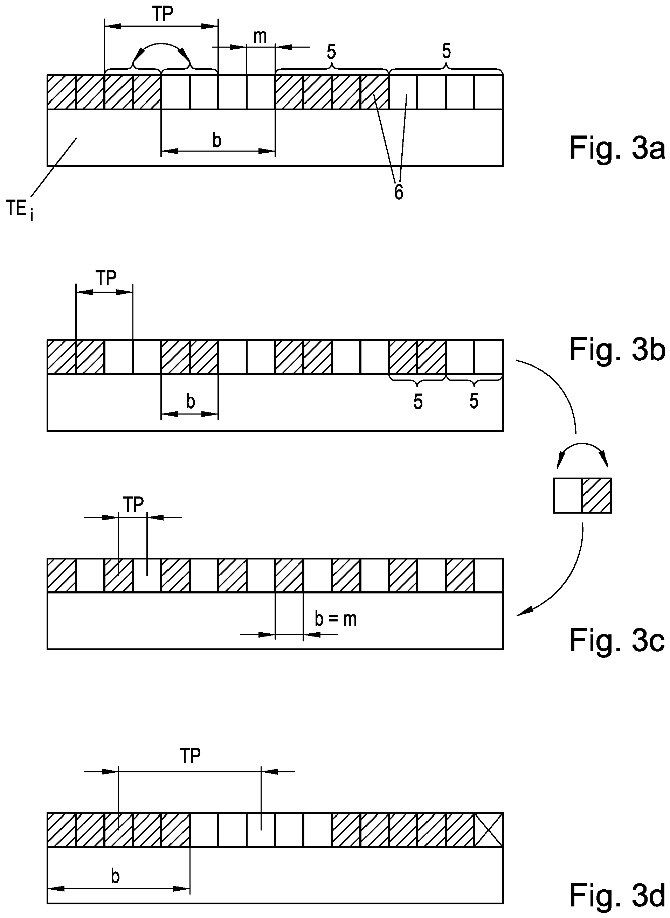

Gemäß einer vorteilhaften Ausgestaltung der Erfindung ist die Anzahl j der Magnetpole 5 und/oder die Polteilung TP und/oder die Polbreite b der Magnetpole 5 an zumindest einer Transporteinheit TEi veränderlich, um die Maximalgeschwindigkeit bei gegebener Belastung oder die Genauigkeit der Transporteinheit TEi einfach und flexibel an gegebene Randbedingungen anpassen zu können. Die Verstellbarkeit kann dabei beispielsweise im Stillstand der Transporteinheit TEi an der Transportstrecke 2 erfolgen oder die Transporteinheit TEi könnte von der Transportstrecke 2 genommen werden, um die Verstellung der Anzahl j der Magnetpole 5, der Polbreite b oder der Polteilung TP durchzuführen. Besonders vorteilhaft ist es allerdings, wenn die Verstellung während der Bewegung der Transporteinheit TEi direkt an der Transportstrecke 2 durchgeführt werden kann. Eine vorteilhafte Möglichkeit, wie die Verstellbarkeit konkret realisiert werden kann wird nachfolgend anhand der Fig.2a-2b und Fig.3a-3d näher erläutert. Die Verstellung der Polteilung TP erfolgt vorteilhafterweise so, dass sich die Polteilung TP möglichst über die gesamte Transportstrecke 2 von der Spulenteilung TS der Antriebsspulen 3 unterscheidet (wobei die Spulenteilung TS vorzugsweise über die gesamte Transportstrecke 2 konstant ist). Dadurch kann vermieden werden, dass die Magnetpole 5 einer Transporteinheit TEi jeweils direkt gegenüber einer Antriebsspule 3 der Transportstrecke 2 liegen, wodurch ein "Einrasten" der Transporteinheit TEi (sogenanntes Cogging) vermieden werden kann. Natürlich kann es aber kurzzeitig vorkommen, dass die Polteilung TP gleich groß ist wie die Spulenteilung TS der Antriebspulen 3, beispielsweise dann, wenn die Verstellung der Polteilung TP während der Bewegung der Transporteinheit TEi von einer Polteilung TP < TS hin zu einer Polteilung TP > TS erfolgt. Der Bereich TP = TS tritt dabei nur kurzzeitig während des tatsächlichen Verstellungsvorgangs auf und wirkt sich deshalb nicht oder nur in sehr geringem Maße die Bewegung der Transporteinheit TEi aus.

In Fig.2a ist eine Transporteinheit TEi in einer Draufsicht dargestellt. Die Transporteinheit TEi weist j=7 Magnetpole 5 auf, die in Längsrichtung hintereinander angeordnet sind. Die Magnetpole 5 weisen hier jeweils einen Permanentmagneten 6 auf, wobei angrenzende Permanentmagnete 6 entgegengesetzte Polung bzw. Magnetisierungsrichtung aufweisen, wie durch die schraffierten Flächen angedeutet ist. Es könnten aber auch mehr als ein Permanentmagnet 6 je Magnetpol 5 vorgesehen sein, wobei die Permanentmagnete 6 eines Magnetpols 5 eine gleiche Polung bzw. Magnetisierungsrichtung aufweisen. Die Magnetpole 5 weisen eine Polbreite b auf und sind in einer konstanten Polteilung TPa voneinander beabstandet. Da jeder Magnetpol 5 durch einen Permanentmagnet 6 ausgebildet ist, entspricht die Polbreite b hier der Magnetbreite m eines Permanentmagneten 6. Die Magnetpole 5 sind so angeordnet, dass sie direkt aneinander angrenzen, also im Wesentlichen ohne Spalt zwischen den Magnetpolen 5.

Zur Verstellung der Position der Magnetpole 5 in Längsrichtung ist an der Transporteinheit TEi eine Verstelleinrichtung 8 vorgesehen. Die Verstelleinrichtung 8 kann beispielsweise als rein mechanische Verstelleinrichtung 8 ausgeführt sein oder elektromechanisch. Im einfachsten Fall wäre es z.B. denkbar, dass die Verstelleinrichtung 8 als eine Art Führungsschiene ausgebildet ist, in der die Magnetpole 5 verschiebbar angeordnet sind. Zur Verstellung der Polteilung TP könnte die Transporteinheit TEi von der Transportstrecke 2 abgenommen werden und die Magnetpole 5 könnten manuell in der Führungsschiene verschoben, in die gewünschte Position gebracht und wieder fixiert werden. Zur Lagefixierung der Magnetpole 5 sind natürlich geeignete (nicht dargestellte) Halteelemente an der Transporteinheit TEi vorzusehen. Dadurch könnte die Polteilung sehr einfach von der ersten Polteilung TPa auf eine zweite Polteilung TPb vergrößert werden, wie in Fig.2b dargestellt ist. Bei der Veränderung der Position der Magnetpole 5 mit fester Polbreite b ergibt sich natürlich ein gewisser Spalt mit einer Spaltbreite s zwischen den Magnetpolen 5.

Eine weitere Möglichkeit wäre z.B., dass zwischen den Magnetpolen 5 Federelemente 9 (in Fig.2a+b angedeutet) vorgesehen werden, durch welche die Polteilung TP von der ersten (geringen) Polteilung TPa zur zweiten (größeren) Polteilung TPb verstellt werden kann. Dazu könnten die Federelemente 9 beispielsweise in der Position der Magnetpole 5 gemäß Fig.2a vorgespannt werden, wobei die Magnetpole 5 mittels geeigneten (nicht dargestellten) Halteelementen wie z.B. Stiften in der Lage fixiert werden. Durch eine geeignete (nicht dargestellte) Auslöseeinheit könnten die Halteelemente gelöst werden, wodurch die Magnetpole 5 aufgrund der Federkraft der Federelemente 9 auseinandergedrückt werden und sich die zweite Polteilung TPb (Fig.2b) einstellt. Natürlich könnten zur Lagefixierung in der Position gemäß Fig.2b wiederum geeignete Halteelemente vorgesehen sein, wie z.B. Stifte. Bei entsprechender Ausgestaltung der Federelemente 9, Halteelemente und der Auslöseeinheit könnten damit natürlich auch eine weitere Verstellbarkeit hin zu einer größeren dritten Polteilung TPc > TPb realisiert werden. Die Auslösung der Auslöseeinheit kann dabei wiederum manuell erfolgen, indem die Transporteinheit TEi von der Transportstrecke 2 genommen wird.

Die Auslösung könnte aber bei entsprechender Anordnung und Ausgestaltung der Auslöseeinheit auch bei an der Transportstrecke 2 angeordneter Transporteinheit TEi im Stillstand oder während der Bewegung der Transporteinheit TEi durchgeführt werden. Wenn die Verstellung während der Bewegung der Transporteinheit TEi erfolgen soll, könnte z.B. eine geeignete Betätigungseinheit an einem gewünschten Auslösepunkt an der Transportstrecke 2 vorgesehen werden, welche die Auslöseeinheit betätigt, wenn die Transporteinheit TEi den Auslösepunkt passiert. Als alternative mechanische Verstelleinrichtung 8 könnte aber beispielsweise auch eine Art Gestänge 13 oder allgemein ein Getriebe vorgesehen sein, mittels dem die Magnetpole 5 mittels eines geeigneten Antriebs im Wesentlichen stufenlos verstellt werden könnten. Die erwähnten Ausgestaltungen sind natürlich nur beispielhaft zu verstehen und es wären viele weitere Varianten der konkreten Ausgestaltung der mechanischen Verstelleinrichtung 8 denkbar, aus denen der Fachmann eine geeignete Variante wählen kann.

Statt einer rein mechanischen Verstelleinrichtung 8 könnte aber auch eine elektromechanische Verstelleinrichtung 8 an der Transporteinheit TEi vorgesehen werden. Denkbar wäre z.B., dass ein zentrales Stellglied 10 vorgesehen wird, beispielsweise in Form eines geeigneten vorzugsweise elektrisch ansteuerbaren Aktuators, mit dem die Position der Magnetpole 5 verstellt werden kann. Als Aktuator könnte z.B. ein elektromagnetischer, pneumatischer, hydraulischer oder ein Piezo-Aktuator verwendet werden. Das zentrale Stellglied 10 könnte wiederum ein Gestänge 13 (oder eine andere Art eines Getriebes) betätigen, um die Polteilung TP der Magnetpole 5 zu verstellen. Natürlich könnte statt des zentralen Stellglieds 10 auch ein eigenes Stellglied je Magnetpol 5 oder je Permanentmagnet 6 vorgesehen werden oder es könnte anlog der Federelemente 9 jeweils ein geeignetes Stellglied zwischen den Magnetpolen 5 vorgesehen werden. Zur Ansteuerung ist vorzugsweise eine Steuereinheit 11 an der Transporteinheit TEi angeordnet, welche die Verstelleinrichtung 8 entsprechend ansteuert, um eine gewünschte Polteilung TP einzustellen.

Zur Energieversorgung der Steuereinheit 11 und des Stellgliedes 10 (oder mehrerer Stellglieder) kann auch ein Energiespeicher 12 an der Transporteinheit TEi angeordnet sein. Neben einer reinen Steuerung im Sinne einer Einstellung von vorgegebenen Polteilungen TP wäre natürlich auch denkbar, dass in der Steuereinheit 11 ein geeigneter Regler zur Regelung der Polteilung TP integriert ist. Beispielsweise wäre denkbar, dass die Polteilung TP nicht fix eingestellt wird, sondern dass die Polteilung TP in Abhängigkeit einer Soll-Maximalgeschwindigkeit der Transporteinheit TEi von der Steuereinheit 11 eingeregelt wird. Die Steuereinheit 11 kann dazu auch mit der Regelungseinheit 7 der Transporteinrichtung kommunizieren, beispielsweise um einen Sollwert oder Istwert zu erhalten. Die Ermittlung von Istwerten für die Regelung, wie z.B. einer Ist-Geschwindigkeit könnte aber auch an der Transporteinheit TEi selbst erfolgen, z.B. durch eine geeignete Sensorik. Ähnlich wie bei der oben beschriebenen rein mechanischen Verstelleinrichtung 8, wäre es auch bei der elektromechanischen Ausgestaltung denkbar, dass die Steuereinheit 11 als Auslöseeinheit dient und dass an einem bestimmten Auslösepunkt an der Transportstrecke 2 eine Betätigungseinheit angeordnet ist. Wenn die Transporteinheit TEi die Betätigungseinheit passiert, könnte z.B. ein elektrisches Signal an die Steuereinheit 11 übermittelt werden und die Steuereinheit 11 betätigt das Stellglied 10 zur Verstellung der Magnetpole 5 entsprechend der gewünschten Polteilung TP.

Beispielsweise könnte die Transportstrecke 2 einen Rückführabschnitt zum Rückführen unbeladener Transporteinheiten TEi aufweisen. Auf dem Rückführabschnitt spielt eine exakte Regelung der Position oder Geschwindigkeit der Transporteinheit TEi keine wesentliche Rolle, sondern es kann beispielsweise lediglich gewünscht sein, die Transporteinheiten TEi möglichst schnell an einen bestimmten Ausgangspunkt der Transportstrecke 2 zurückzubewegen. Beispielsweise an einen Punkt, an dem die Transporteinheiten erneut mit einem Gegenstand beladen werden. Der Auslösepunkt könnte in diesem Fall am Beginn des Rückführabschnitts der Transportstrecke 2 angeordnet sein, um die Polteilung TP im Bereich des Rückführabschnitts zu vergrößern und damit die Maximalgeschwindigkeit zu erhöhen. Am Ende des Rückführabschnitts könnte die Polteilung TP wieder auf die ursprüngliche Polteilung TP reduziert werden. Wenn beispielsweise eine drahtlose Kommunikation zwischen der Regelungseinheit 7 der Transporteinrichtung und der Steuereinheit 11 der Transporteinheit TEi vorgesehen ist, kann die Verstellung der Polteilung TP auch unabhängig von Auslösepunkten an einem beliebigen anderen Punkt der Transportstrecke 2 vorgenommen werden.

In den Fig.3a-3d ist eine weitere vorteilhafte Ausgestaltung der Erfindung dargestellt. Die Transporteinheit TEi in Fig.3a weist eine Anzahl von j=4 Magnetpole 5 auf, wobei jeder Magnetpol 5 aus einer Anzahl von p=4 Permanentmagneten 6 besteht. In Summe sind also sechzehn Permanentmagnete 6 in Längsrichtung hintereinander an der Transporteinheit TEi angeordnet, wobei jeder Permanentmagnet 6 eine Magnetbreite m aufweist. Die Permanentmagnete 6 eines Magnetpols 5 weisen eine gleiche Polung auf, wie durch die Schraffur symbolisiert ist, um den Magnetpol 5 auszubilden. Um die Anzahl j der Magnetpole 5 und/oder die Polteilung TP und/oder die Polbreite b zu verändern, können die magnetischen Eigenschaften der einzelnen Permanentmagnete 6 verändert werden. Dazu sind die Permanentmagnete 6 aus einem geeigneten magnetisierbaren Material ausgeführt, beispielsweise aus AlNiCo. Unter der Veränderung der magnetischen Eigenschaften ist beispielsweise die Veränderung der magnetischen Feldstärke der Permanentmagnete 6 zu verstehen. Das kann bedeuten, dass ein oder mehrere Permanentmagnete 6 umgepolt werden (im Sinne einer Umkehrung von Nord- und Südpol) und/oder dass die magnetische Feldstärke der Permanentmagneten 6 variiert wird oder dass die Permanentmagnete 6 entmagnetisiert werden. Natürlich ist auch eine Kombination denkbar, z.B. eine Umpolung mit Verringerung oder Erhöhung der magnetischen Feldstärke. Unter Entmagnetisieren ist in diesem Zusammenhang aber nicht zwangsläufig ein absolutes Entmagnetisieren zu verstehen (im Sinne dass die magnetische Feldstärke gleich Null ist), da dies in der Praxis (insbesondere in kurzer Zeit) aufgrund der magnetischen Hysterese schwer zu realisieren ist. Es kann also ausreichend sein, dass die magnetische Feldstärke so weit reduziert wird, dass der jeweilige Permanentmagnet 6 keinen wesentlichen Beitrag mehr zur Erzeugung der Antriebskraft der betreffenden Transporteinheit TEi leistet. Um die magnetischen Eigenschaften der Permanentmagnete 6 zu verändern, wird jeweils ein Permanentmagnet 6 oder eine Gruppe von Permanentmagneten 6 einem äußeren Magnetfeld ausgesetzt, das ausreichend stark ist, um die Magnetisierungsrichtung des/der Permanentmagneten 6 zu ändern (Umpolung) und/oder die magnetische Feldstärke zu verändern oder den/die Permanentmagnete 6 zu entmagnetisieren. Alternativ könnten die Permanentmagnete 6 aber auch wechselbar an der Transporteinheit TEi angeordnet sein und statt der magnetischen Umpolung ausgetauscht werden, um die gewünschte Änderung der Anzahl j der Magnetpole 5 oder der Polteilung TP oder der Polbreite zu erreichen.

Die Transporteinheit TEi in Fig.3b weist beispielsweise eine Anzahl von j=8 Magnetpole 5 auf, die jeweils aus p=2 Permanentmagneten 6 bestehen. Im Vergleich zu Fig.3a hat sich dadurch bei unveränderter Anzahl von in Summe sechzehn Permanentmagneten 6 die Anzahl j der Magnetpole 5 verdoppelt, wobei sich die Polteilung TP und die Polbreite b halbiert haben. Ausgehend von Fig.3a könnten die Permanentmagnete 6 immer entsprechend paarweise umgepolt werden, um zur Ausgestaltung gemäß Fig.3b zu gelangen oder die Permanentmagnete 6 könnten paarweise getauscht werden, wie durch den Doppelpfeil in Fig.3a angedeutet ist. In analoger Weise kann die Anzahl j der Magnetpole 5 bei gleichzeitiger Verringerung der Polteilung TP und der Polbreite b weiter erhöht werden, wie anhand Fig.3c dargestellt ist. Hier ist jeder Magnetpol 5 durch einen Permanentmagnet 6 ausgebildet, folglich weist die Transporteinheit TEi eine Anzahl von j=16 Magnetpole 5 auf und die Polteilung TP und die Polbreite b entsprechen der Magnetbreite m eines Permanentmagneten 6. Ausgehend von Fig.3b kann die Variante gemäß Fig.3c erreicht werden, indem z.B. jeweils einzelne Permanentmagnete 6 ausgetauscht werden oder umgepolt werden. Natürlich könnte zusätzlich auch die magnetische Feldstärke der Permanentmagnete 6 verändert werden, beispielsweise, um eine größere Antriebskraft erzeugen zu können.

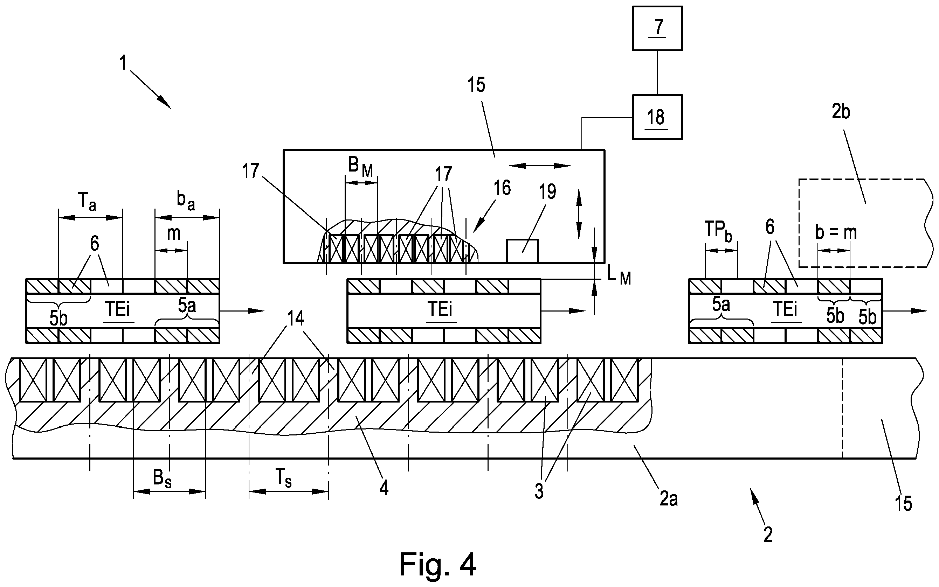

In Fig.3d ist schließlich eine Transporteinheit TEi mit einer Anzahl von j=3 Magnetpolen 5 gezeigt, wobei die Anzahl p von Permanentmagneten 6 unverändert p= 16 beträgt. Da das Verhältnis p/j von Anzahl p=16 von Permanentmagneten 6 zu Anzahl j von Magnetpolen 5 in diesem Fall keine ganze Zahl ergibt, sind je Magnetpol 5 nur fünf Permanentmagnete 6 mit gleicher Polung vorgesehen, was in Summe 15 Permanentmagnete 6 für die drei Magnetpole 5 ergibt. Der übrige Permanentmagnet 6 (hier der rechts äußerste) wird hier vorzugsweise nicht als Teil eines Magnetpols 5 verwendet, um eine konstante Polteilung TP und Polbreite b zu erreichen und kann entweder entfernt oder entmagnetisiert werden, was wiederum mittels eines geeigneten äußeren Magnetfeldes erfolgen kann. Da ein absolutes Entmagnetisieren aufgrund er magnetischen Hysterese in der Praxis oftmals schwierig zu erreichen sein kann, kann es natürlich auch ausreichen, wenn die magnetische Feldstärke soweit verringert wird, dass der entsprechende Permanentmagnet 6 keinen wesentlichen Beitrag mehr zur Erzeugung der Antriebskraft leistet. Die Polteilung TP und die Polbreite b entsprechen im Beispiel gemäß Fig.3d der Summe der Magnetbreiten m der fünf Permanentmagnete 6. Es ist also ersichtlich, dass durch Tausch oder Um- bzw. Entmagnetisieren der Permanentmagnete 6 einer Transporteinheit TEi die Anzahl j der Magnetpole 5, die Polteilung TP und die Polbreite b sehr flexibel angepasst werden können. Der manuelle Tausch von einzelnen Permanentmagneten 6 kann allerdings im Gegensatz zum Um- bzw. Entmagnetisieren nicht während der Bewegung der Transporteinheit TEi auf der Transportstrecke 2 durchgeführt werden. Wie das Um- bzw. Entmagnetisieren der Permanentmagnete 6 an der Transporteinrichtung durchgeführt werden kann, wird nachfolgend anhand Fig.4 näher erläutert.

In Fig.4 ist ein Ausschnitt einer Transporteinrichtung 1 im Bereich eines geraden Transportstreckenabschnitts dargestellt. An der Transportstrecke 2 sind in bekannter Weise die Antriebsspulen 3 angeordnet, die üblicherweise in einem konstanten Abstand, der Spulenteilung TS in Längsrichtung voneinander beabstandet sind und eine bestimmte festgelegte Spulenbreite $B_S$ aufweisen. Die Antriebsspulen 3 können z.B. im Wesentlichen kreisrund ausgeführt sein und um Zähne 14 des ferromagnetischen Kerns 4 herum angeordnet sein. Parallel zur Transportstrecke 2 ist hier eine Magnetisierungseinrichtung 15 angeordnet, die zur Um- bzw. Entmagnetisierung der Permanentmagnete 6 der Transporteinheit TEi vorgesehen ist, wie anhand der Fig.3a-3d beschrieben wurde. Die Magnetisierungseinrichtung 15 ist hier für Transporteinheiten TEi mit beidseitig angeordneten Magnetpolen 5 vorgesehen, wie sie für eine Transportstrecke 2 in Doppelkamm-Ausführung verwendet werden, z.B. im Transportstreckenabschnitt A in Fig.1. Die Magnetisierungseinrichtung 15 kann als separate Einheit, sowie in Fig.4 ausgeführt sein, könnte aber z.B. auch in einer Transportstrecke integriert sein, wie in Fig.1 durch den gestrichelten Bereich am zweiten Transportstreckenabschnitt 2b angedeutet ist.

Um den Bewegungsablauf der restlichen Transporteinheiten TEi einer Transportstrecke 2 nicht zu behindern, könnte die Magnetisierungseinrichtung 15 beispielsweise auch auf einem eigens dafür vorgesehenen (nicht dargestellten) Transportstreckenabschnitt angeordnet sein, in der Art eines "Abstellgleises". Z.B. könnte die Transporteinheit TEi, deren Permanentmagnete 6 um- bzw. entmagnetisiert werden sollen mittels einer Weiche von der geschlossenen Transportstrecke 2 auf den separaten Transportstreckenabschnitt bewegt werden und auf diesem mittels der Magnetisierungseinrichtung 15 um- bzw. entmagnetisiert werden, während die restlichen Transporteinheiten TEi ihren vorgegebenen Bewegungsablauf auf der Transportstrecke ungestört fortsetzen können. Wenn das Um- bzw. Entmagnetisieren abgeschlossen ist, kann die entsprechende Transporteinheit TEi wieder vom separaten Transportstreckenabschnitt in Gegenrichtung zurück auf die geschlossene Transportstrecke 2 bewegt werden, was wiederum im Falle des Transportstreckenabschnitts in Form eines "Abstellgleises" über die Weiche erfolgen kann. Der Transportstreckenabschnitt könnte aber auch als paralleler Abschnitt mit zwei Weichen ausgeführt sein, wobei die Transporteinheit TEi über eine erste Weiche von der Transportstrecke auf den parallelen Transportstreckenabschnitt bewegt werden kann, danach entlang des parallelen Transportstreckenabschnitts zur Magnetisierungsvorrichtung 15 und über eine zweite Weiche in der gleichen Bewegungsrichtung wieder zurück auf die Transportstrecke 2. Dadurch wäre es z.B. auch möglich, dass mehrere Transporteinheiten TEi sequentiell um- bzw. entmagnetisiert werden können, ohne sich gegenseitig bei der Ausfahrt zurück auf die Transportstrecke 2 zu behindern.

Die Transporteinheit TEi in Fig.4 weist beidseitig jeweils eine Anzahl von p=6 Permanentmagnete 6 auf, welche erste Magnetpole 5a (in Bewegungsrichtung links) und zweite Magnetpole 5b (in Bewegungsrichtung rechts) ausbilden. In Bewegungsrichtung (Pfeil in Fig.4) vor der Magnetisierungseinrichtung 15 gesehen sind die ersten und zweiten Magnetpole 5a, 5b jeweils durch zwei Permanentmagnete 6 mit gleicher Polung und vorzugsweise gleicher magnetischer Feldstärke gebildet. Damit weist die Transporteinheit TEi vor der Magnetisierungseinrichtung 15 an beiden Seiten eine identische Anzahl j=3 Magnetpole 5 auf mit einer ersten Polteilung TPa und einer ersten Polbreite $b_a$, wobei die Polbreite $b_a$ der Breite zweier Permanentmagnete 6 entspricht (b=2m). Die erste Polteilung TPa entspricht im Wesentlichen der ersten Polbreite $b_a$, da die Permanentmagnete 6 unmittelbar im Wesentlichen ohne Spalt aneinander angrenzen. Transporteinheit TEi kann in bekannter Weise durch Zusammenwirken der Magnetpole 5a mit den Antriebsspulen 3 der Transportstrecke 2 in Bewegungsrichtung bewegt werden, wie durch die Pfeile an den Transporteinheiten TEi symbolisiert ist.

Die Magnetisierungseinrichtung 15 weist eine Magnetisierungseinheit 16 auf, die hier in Form von mehreren Magnetisierungsspulen 17 ausgebildet ist. Die Magnetisierungsspulen 17 sind in ähnlicher Weise wie die Antriebsspulen 3 der Transportstrecke 2 in Längsrichtung hintereinander an der Magnetisierungseinrichtung 15 angeordnet und weisen jeweils eine bestimmte Magnetisierungsspulenbreite $B_M$ auf. Die Magnetisierungsspulen 17 sind so ausgeführt, dass sie ein ausreichend starkes Magnetfeld erzeugen können, das geeignet ist, die magnetischen Eigenschaften der Permanentmagnete 6 der Transporteinheit TEi zu verändern, also z.B. umzupolen oder zu entmagnetisieren. Die Magnetisierungseinrichtung 15 ist in Querrichtung so angeordnet, dass ein bestimmter Magnetspalt $L_M$ zwischen den Magnetisierungsspulen 17 und den Permanentmagneten 6 vorgesehen ist. Um die Wirkung beispielsweise der Umpolung oder Entmagnetisierung zu verbessern, ist es vorteilhaft, wenn der Magnetspalt $L_M$ möglichst klein ausgeführt wird, weil dadurch das von den Magnetisierungsspulen 17 erzeugten Magnetfeld besser in die Permanentmagnete 6 eingeprägt werden kann (kleinerer Magnetspalt $L_M$ bedeutet geringerer magnetischer Widerstand). Besonders vorteilhaft ist es, wenn der Magnetspalt $L_M$ gänzlich vermieden wird und die Permanentmagnete 6 im Wesentlichen direkt an den Magnetisierungsspulen 17 anliegen, weil dadurch der magnetische Widerstand des Magnetspaltes verringert, insbesondere vermieden werden kann.

Die Magnetisierungsspulenbreite $B_M$ wird vorteilhafterweise in Abhängigkeit der Magnetbreite m der Permanentmagnete 6 der Transporteinheit TEi gewählt. Wenn beispielsweise gewünscht ist, dass jeder einzelne Permanentmagnet 6 umgepolt oder entmagnetisiert werden kann, sollte die Magnetisierungsspulenbreite $B_M$ vorzugsweise maximal der Magnetbreite m betragen ($B_M \leq m$), um keine, an den umzupolenden Permanentmagnet 6 angrenzenden Permanentmagnete 6 ebenfalls in gleicher Weise umzupolen. Natürlich ist dies nicht ganz exakt, sondern hängt z.B. auch davon ab, ob zwischen den Permanentmagneten ein Spalt vorgesehen ist oder ob die Permanentmagnete 6 im Wesentlichen direkt aneinander angrenzen, so wie in Fig.4 dargestellt ist. Natürlich ist diese Einschränkung nicht zwingend notwendig, die Magnetisierungsspulenbreite $B_M$ der Magnetisierungsspulen 17 könnte natürlich auch größer gewählt werden, vorteilhafterweise beträgt die Magnetisierungsspulenbreite $B_M$ ein ganzes Vielfaches der Magnetbreite m ($B_M \sim x*m$; $\chi \in \mathcal{N}$), wobei die maximale Magnetisierungsspulenbreite $B_M$ so gewählt werden sollte, dass aus der verfügbaren Anzahl p von Permanentmagneten 6 zumindest zwei Magnetpole 5 realisierbar sind, im dargestellten Beispiel würde die maximale Magnetisierungsspulenbreite $B_M$ demnach $B_M=3*m$ betragen.

Die Umpolung oder das Entmagnetisieren bzw. allgemein die Veränderung der magnetischen Eigenschaften der Permanentmagnete 6 kann im Stillstand der Transporteinheit TEi erfolgen, kann aber auch während der Bewegung der Transporteinheit TEi entlang der Transportstrecke 2 erfolgen, beispielsweise dann, wenn die Magnetisierungseinrichtung 15 selbst parallel zur Transportstrecke 2 bewegt werden kann, wie durch den Doppelpfeil in Fig.4 angedeutet ist. Die Bewegung erfolgt dabei vorzugsweise mit der gleichen Geschwindigkeit, mit der die Transporteinheit TEi entlang der Transportstrecke 2 bewegt wird. Nach erfolgter Umpolung (in Fig.4 mitte + rechts) weist die Transporteinheit an der, der Transportstrecke 2 zugewandten Seite eine unveränderte Anzahl von j=3 Magnetpolen 5 auf, mit jeweils einer Anzahl von p=2 Permanentmagneten 6. An der gegenüberliegenden Seite der Transporteinheit TEi, an der die Umpolung (im Sinne einer Umkehrung von Nord- und Südpol) durch die Magnetisierungseinrichtung 15 erfolgt ist, weist die Transporteinheit TEi nunmehr eine Anzahl von j=6 Magnetpole 5 auf, die jeweils aus einem Permanentmagnet 6 bestehen. Natürlich könnte anstatt der Umpolung auch wiederum eine Veränderung der magnetischen Feldstärke der Permanentmagnete 6 erfolgen, wobei vorzugsweise alle Permanentmagnete 6 einer Transporteinheit TEi eine gleich große magnetische Feldstärke aufweisen. Die Transporteinheit TEi könnte danach beispielsweise in einen Transportstreckenabschnitt in Form eines Doppelkamms bewegt werden, wie durch den gestrichelten zweiten Transportstreckenabschnitt 2b angedeutet ist. Die Bewegung der Transporteinheit TEi könnte dann durch Zusammenwirken der Antriebsspulen 3 des zweiten Transportstreckenabschnitts 2b erfolgen und im ersten Transportstreckenabschnitt 2a könnte eine weitere Magnetisierungseinrichtung 15 integriert sein, wie in Fig.4 angedeutet ist.

Natürlich muss die Magnetisierungseinheit 16 aber nicht, so wie dargestellt, eine Mehrzahl von Magnetisierungsspulen 17 aufweisen, sondern es könnte beispielsweise auch ausreichend sein, wenn nur eine Magnetisierungsspule 17 in der Magnetisierungseinheit 16 angeordnet ist. Die Transporteinheit TEi würde dann so an der Transportstrecke 2 bewegt werden, dass jeweils ein umzupolender Permanentmagnet 6 von der Magnetisierungsspule 17 beaufschlagt wird und nach abgeschlossener Umpolung würde die Transporteinheit TEi um einen entsprechende Weg weiterbewegt werden, um den nächsten Permanentmagnet 6 oder die nächste Gruppe von Permanentmagneten 6 in den Bereich der Magnetisierungsspule 17 zu bringen usw. Neben der Umpolung wäre natürlich auch wiederum eine Veränderung der magnetischen Feldstärke oder ein Entmagnetisieren möglich. Die Bewegungssteuerung der Transporteinheit TEi kann in herkömmlicher Weise über die Regelungseinheit 7 der Transporteinrichtung 1 erfolgen. Die Steuerung der Magnetisierungseinrichtung 15 kann beispielsweise über eine innerhalb oder außerhalb der Magnetisierungseinrichtung 15 vorgesehene Magnetisierungssteuereinheit 18 erfolgen.

Die Magnetisierungssteuereinheit 18 kann auch mit der Regelungseinheit 7 der Transporteinrichtung 1 verbunden sein, beispielsweise um Positionsdaten der Transporteinheiten TEi oder Sollwerte für die Umpolung oder Entmagnetisierung zu erhalten. Solche Sollwerte können z.B. eine gewünschte Anzahl j von Magnetpolen 5, eine Polteilung TP oder Polbreite b einer bestimmten Transporteinheit TEi sein. Die Magnetisierungssteuereinheit 18 kann dann beispielsweise basierend auf den erhaltenen Sollwerten die Magnetisierungseinheit 16, insbesondere die darin vorgesehenen Magnetisierungsspulen 17 entsprechend ansteuern, beispielsweise mit einer bestimmten Spannung, einem Strom und einer Stromrichtung, um die gewünschte Umpolung und/oder Veränderung der magnetischen Feldstärke oder Entmagnetisierung der, den Magnetisierungsspulen 17 zugeordneten Permanentmagnete 6 zu erreichen. Eine Energieversorgung der Magnetisierungseinrichtung 15 kann natürlich ebenfalls über die Magnetisierungssteuereinheit 18 erfolgen oder auch durch einen separate (nicht dargestellte) Spannungsversorgung. Weiters kann die Magnetisierungseinrichtung 15 auch einen oder mehrere Sensoren 19 aufweisen, die beispielsweise zur Bestimmung einer Position der Transporteinheit TEi relativ zur Magnetisierungseinrichtung 15, insbesondere relativ zu den Magnetisierungsspulen 17 vorgesehen ist/sind. Damit kann eine sehr genaue Synchronisation zwischen Permanentmagneten 6 und den Magnetisierungsspulen 17 erfolgen. Der oder die Sensoren 19 können dazu natürlich wiederum mit der Magnetisierungssteuereinheit 18 verbunden sein. Die Magnetisierungssteuereinheit 18 könnte basierend auf dem Positionssignal der/des Sensors 17 die Regelungseinheit 7 der Transporteinrichtung 1 ansteuern, welche die Position der Transporteinheit TEi steuert, um die Permanentmagneten 6 und die Magnetisierungsspulen 17 zu synchronisieren.

Wenn die Magnetisierungseinrichtung 15 selbst in Längsrichtung beweglich ausgeführt ist, wie durch den horizontalen Doppelpfeil in Fig.4 angedeutet ist, könnte die Umpolung und/oder die Veränderung der magnetischen Feldstärke oder die Entmagnetisierung auch während der Bewegung der Transporteinheit TEi durchgeführt werden. Dadurch können Bewegungsabläufe der Transporteinrichtung 1 zeitlich weiter optimiert werden, weil kein Stillstand der Transporteinheit TEi erforderlich ist. Die Bewegung der Magnetisierungseinrichtung 15 kann wiederum von der Magnetisierungssteuereinheit 18 gesteuert werden, wobei natürlich eine entsprechende (nicht dargestellte) Führungseinrichtung und ein geeigneter Antrieb vorzusehen sind. Um den Magnetspalt $L_M$ möglichst klein zu halten, was für eine rasche und wirkungsvolle Änderung der magnetischen Eigenschaften (Umpolung/Entmagnetisierung/ Veränderung der magnetischen Feldstärke) vorteilhaft ist, wäre es beispielsweise auch denkbar, dass die Magnetisierungseinrichtung 15 zusätzlich zur Längsbewegung (oder unabhängig davon wenn die Magnetisierungseinrichtung 15 in Längsrichtung unbeweglich ist) in Querrichtung bewegbar ausgeführt ist, wie durch den vertikalen Doppelpfeil in Fig.4 angedeutet ist. Wenn eine umzupolende Transporteinheit TEi in der Magnetisierungseinrichtung 15 positioniert und entsprechend mit den Magnetisierungsspulen 17 synchronisiert ist, kann die Magnetisierungseinrichtung 15 in Querrichtung hin zur Transporteinheit TEi bewegt werden, um den Magnetspalt $L_M$ zu verringern. Vorzugsweise wird der Magnetspalt $L_M$ auf einen Magnetspalt $L_M=0$ minimiert, um einen direkten Kontakt zwischen Magnetisierungsspulen 17 und Permanentmagneten 6 zu erzeugen, wodurch der Vorgang des Umpolens/Entmagnetisierens verbessert, insbesondere beschleunigt werden kann.

Die Magnetisierungseinrichtung 15 muss aber nicht zwingend, so wie in Fig.4 dargestellt, als fester Bestandteil der Transporteinrichtung 1 ausgeführt sein, sondern sie könnte beispielsweise auch als externe tragbare Einheit ausgeführt sein, die bei Bedarf dazu verwendet werden kann, die Permanentmagnete 6 der Transporteinheiten TEi umzupolen oder zu entmagnetisieren. Dies kann direkt an der Transportstrecke erfolgen, ähnlich wie in Fig.4 dargestellt, könnte aber auch abseits der Transportstrecke 2 erfolgen, z.B. bevor eine entsprechende Transporteinheit TEi an der Transportstrecke 2 angeordnet wird oder wenn eine Transporteinheit TEi von der Transportstrecke 2 abgenommen wird.

Natürlich könnte an der Magnetisierungseinrichtung 15 auch eine eigene (nicht dargestellte) Bedieneinheit angeordnet sein, über welche ein Benutzer Einstellungen bezüglich der gewünschten Umpolung/Entmagnetisierung treffen kann.

Gemäß einer weiteren vorteilhaften Ausgestaltung der Magnetisierungseinrichtung 15 ist die Magnetisierungseinrichtung 15 direkt in der Transportstrecke 2 der Transporteinrichtung 1 integriert, wie durch den gestrichelten Bereich am rechten Ende der Transportstrecke 2 in Fig.4 angedeutet ist (siehe auch zweiter Transportstreckenabschnitt 2b in Fig.1). In diesem Fall können für die Änderung der magnetischen Eigenschaften (Umpolen/Entmagnetisieren/ Veränderung der magnetischen Feldstärke) der Permanentmagnete 6 die Antriebsspulen 3 der Transportstrecke 3 verwendet werden und es sind keine separaten Magnetisierungsspulen 17 erforderlich. Die Antriebsspulen 3 sind dabei entsprechend auszuführen, um ein ausreichend starkes Magnetfeld erzeugen zu können, das geeignet ist, die Permanentmagnete 6 umzupolen oder zu entmagnetisieren. Das bedeutet, dass bei entsprechender konstruktiver Auslegung der Antriebsspulen 3 und entsprechender Ansteuerung der Antriebsspulen 3 im Wesentlichen die gesamte Transportstrecke 2 als Magnetisierungseinrichtung 15 verwendet werden kann.

Wenn die Spulenbreite $B_S$ der Antriebsspulen 3 größer ist als die Magnetbreite m der Permanentmagnete 6 der Transporteinheit TEi kann es sein, dass nicht jeder Permanentmagnet 6 einzeln umgepolt werden kann, sondern dass die Permanentmagnete 6 unter Umständen nur paarweise oder gruppenweise umgepolt werden können. Wenn trotzdem eine individuelle Umpolung einzelner Permanentmagnete 6 gewünscht ist, was die Flexibilität hinsichtlich Anzahl j von Magnetpolen 5, Polteilung TP und Polbreite b erhöht, könnte beispielsweise ein begrenzter Abschnitt der Transportstrecke 2 als Magnetisierungseinrichtung 15 ausgeführt sein, wobei die Spulenbreite $B_S$ der Antriebsspulen 3 in diesem Abschnitt kleiner ist, als die Spulenbreite $B_S$ der restlichen Antriebsspulen 3 der Transportstrecke 2 und vorzugsweise im Wesentlichen der Magnetbreite m der Permanentmagnete 6 entspricht.

Natürlich ist auch bei der in die Transportstrecke 2 integrierten Magnetisierungseinrichtung 15 eine Positionssynchronisierung vorteilhaft, um die zur Umpolung vorgesehenen Antriebsspulen 3 in Übereinstimmung mit den entsprechenden Permanentmagneten 6 zu bringen. Dies kann wiederum mittels der Magnetisierungssteuereinheit 18 und entsprechenden Sensoren 19 erfolgen oder auch direkt mittels der Regelungseinheit 7 der Transporteinrichtung 1. Wenn die Transportstrecke 2 aus einzelnen in Längsrichtung hintereinander angeordneten Transportsegmenten TSi modular aufgebaut ist, wäre es z.B. denkbar, dass ein Transportsegment TSi als Magnetisierungseinrichtung 15 ausgeführt ist. Dadurch kann beispielsweise eine bestehende Transportstrecke 2 einfach um eine Magnetisierungseinrichtung 15 erweitert werden, beispielsweise durch Austausch eines herkömmlichen Transportsegments TSi durch ein Transportsegment in Form einer Magnetisierungseinrichtung 15, wie in Fig.1 anhand Transportsegment TS3 angedeutet ist.

**Patentansprüche**

1. Transporteinrichtung (1) in Form eines Langstatorlinearmotors mit einer Transportstrecke (2), entlang der zumindest zwei Transporteinheiten (TEi) in Längsrichtung bewegbar sind, wobei an der Transportstrecke (2) eine Mehrzahl von Antriebsspulen (3) in Längsrichtung hintereinander angeordnet ist und an den Transporteinheiten (TEi) jeweils eine Mehrzahl von Magnetpole (5) in Längsrichtung mit einer bestimmten Polteilung (TP) hintereinander angeordnet ist, die mit den Antriebsspulen (3) elektromagnetisch zusammenwirkt, um die Transporteinheiten (TEi) zu bewegen, wobei jeder Magnetpol (5) zumindest einen Permanentmagnet (6) aufweist, **dadurch gekennzeichnet, dass** die Magnetpole (5) der zumindest zwei Transporteinheiten (TEi) eine unterschiedliche Polteilung (TP) aufweisen.

2. Transporteinrichtung (1) nach Anspruch 1, **dadurch gekennzeichnet, dass** die zumindest zwei Transporteinheiten (TEi) eine unterschiedliche Anzahl (j) von Magnetpolen (5) aufweisen und/oder dass die Magnetpole (5) der zumindest zwei Transporteinheiten (TEi) eine unterschiedliche Polbreite (b) aufweisen.

3. Transporteinrichtung (1) nach Anspruch 1 oder 2, **dadurch gekennzeichnet, dass** an zumindest einer Transporteinheit (TEi) eine Anzahl (j) der Magnetpole (5) und/oder die Polteilung (TP) und/oder eine Polbreite (b) der Magnetpole (5) während der Bewegung der Transporteinheit (TEi) entlang der Transportstrecke (2) und/oder im Stillstand veränderlich ist.

4. Transporteinrichtung (1) nach Anspruch 3, **dadurch gekennzeichnet, dass** zur Veränderung der Anzahl (j) der Magnetpole (5) und/oder der Polteilung (TP) und/oder der Polbreite (b) der Magnetpole (5) zumindest ein Permanentmagnet (6) einer Transporteinheit (TEi) auswechselbar ist.

5. Transporteinrichtung (1) nach Anspruch 3 oder 4, **dadurch gekennzeichnet, dass** zur Veränderung der Anzahl (j) der Magnetpole (5) und/oder der Polteilung (TP) und/oder der Polbreite (b) der Magnetpole (5) eine Magnetisierungseinrichtung (15) in der Transporteinrichtung (1) vorgesehen ist, mittels der magnetische Eigenschaften zumindest eines Permanentmagneten (6) einer Transporteinheit (TEi) veränderbar sind, wobei die Magnetisierungseinrichtung (15) in der Transportstrecke (2) der Transporteinrichtung (1) integriert ist oder parallel zur Transportstrecke (2) angeordnet ist.

6. Transporteinrichtung (1) nach einem der Ansprüche 3 bis 5, **dadurch gekennzeichnet, dass** zur Veränderung der Polteilung (TP) der Magnetpole (5) einer Transporteinheit (TEi) eine Position zumindest eines Permanentmagnet (6) in Längsrichtung der Transporteinheit (TEi) mittels einer an der Transporteinheit (TEi) angeordneten Verstelleinrichtung (8) veränderbar ist.

7. Transporteinrichtung (1) nach einem der Ansprüche 1 bis 6, **dadurch gekennzeichnet, dass** sich eine Spulenteilung (TS) der Antriebsspulen (3) in Längsrichtung entlang der Transportstrecke (2) von der Polteilung (TP) der Transporteinheiten (TEi) unterscheidet, wobei die Spulenteilung (TS) vorzugsweise über die gesamte Transportstrecke (2) konstant ist.

8. Transporteinheit (TEi) für eine Transporteinrichtung (1) in Form eines Langstatorlinearmotors, mit einer Mehrzahl von in Längsrichtung der Transporteinheit (TEi) in einer bestimmten Polteilung (TP) hintereinander angeordneten Magnetpolen (5), wobei jeder Magnetpol (5) zumindest einen Permanentmagnet (6) aufweist, **dadurch gekennzeichnet, dass** die Polteilung (TP) der Magnetpole (5) der Transporteinheit (TEi) veränderbar ist.

9. Transporteinheit (TEi) nach Anspruch 8 , **dadurch gekennzeichnet, dass** an der Transporteinheit (TEi) eine Verstelleinrichtung (8) vorgesehen ist, mittels der eine Position zumindest eines der Permanentmagnete (6) in Längsrichtung der Transporteinheit (TEi) veränderbar ist, um die Polteilung (TP) der Magnetpole (5) zu verändern.

10. Transporteinheit (TEi) nach Anspruch 9, **dadurch gekennzeichnet, dass** die Verstelleinrichtung (8) mechanisch ausgeführt ist, wobei die Verstelleinrichtung (8) ein Getriebe oder ein Gestänge und/oder zumindest ein Federelement (9) zur Verstellung der Polteilung (TP) aufweist oder dass die Verstelleinrichtung (8) elektromechanisch ausgeführt ist und zumindest ein elektromechanisches Stellglied (10) aufweist, wobei an der Transporteinheit (TEi) eine Steuereinheit (11) zur Ansteuerung des zumindest einen Stellglieds (10) vorgesehen ist, um die Polteilung ($T_P$) zu verändern.

11. Transporteinheit (TEi) nach Anspruch 9 oder 10, **dadurch gekennzeichnet, dass** die Transporteinheit (TEi) eine Auslöseeinheit zur Auslösung der Verstellung der Polteilung ($T_P$) aufweist, wobei die Auslöseeinheit manuell oder von einer Betätigungseinheit einer Transporteinrichtung (1) in Form eines Langstatorlinearmotors betätigbar ist.

12. Transporteinheit (TEi) nach einem der Ansprüche 8 bis 11, **dadurch gekennzeichnet, dass** zur Veränderung der Polteilung (TP) und/oder einer Anzahl (j) der Magnetpole (5) und/oder einer Polbreite (b) der Magnetpole (5) zumindest ein Permanentmagnet (6) der Transporteinheit (TEi) wechselbar ist und/oder dass die magnetischen Eigenschaften zumindest eines Permanentmagneten (6) mittels einer Magnetisierungseinrichtung (15) veränderbar ist.

13. Magnetisierungseinrichtung (15) für eine Transporteinheit (TEi) einer Transporteinrichtung (1) in Form eines Langsgatorlinearmotors, mit einer Mehrzahl von in Längsrichtung der Transporteinheit (TEi) mit einer bestimmten Polteilung (TP) hintereinander angeordneten Magnetpolen (5), wobei jeder Magnetpol (5) zumindest einen Permanentmagnet (6) aufweist, **dadurch gekennzeichnet, dass** die Magnetisierungseinrichtung (15) eine Magnetisierungseinheit (16) und eine Magnetisierungssteuereinheit (18) aufweist, wobei die Magnetisierungseinheit (16) vorgesehen ist, ein magnetisches Feld zu erzeugen, um magnetische Eigenschaften zumindest eines Permanentmagneten (6) der Transporteinheit (TEi) zu verändern, um die Polteilung (TP) der Magnetpole (5) zu verändern und dass die Magnetisierungssteuereinheit (18) zur Ansteuerung der Magnetisierungseinheit (16) vorgesehen ist.

14. Magnetisierungseinrichtung (15) nach Anspruch 13, **dadurch gekennzeichnet, dass** die Magnetisierungseinheit (16) vorgesehen ist, ein magnetisches Feld zu erzeugen, um magnetische Eigenschaften zumindest eines Permanentmagneten (6) der Transporteinheit (TEi) zu verändern, um eine Anzahl (j) der Magnetpole (5) und/oder eine Polbreite (b) zu verändern.

15. Magnetisierungseinrichtung (15) nach Anspruch 13 oder 14, **dadurch gekennzeichnet, dass** die Magnetisierungseinheit (16) zur Erzeugung des magnetischen Feldes zumindest eine Magnetisierungsspule (17) aufweist, wobei die zumindest eine Magnetisierungsspule (17) vorzugsweise eine Magnetisierungsspulenbreite ($b_M$) aufweist, die einer Magnetbreite (m) eines Permanentmagnet (6) der Transporteinheit (TEi) oder einem ganzzahligen Vielfachen der Magnetbreite (m) eines Permanentmagnet (6) der Transporteinheit (TEi) entspricht.

16. Magnetisierungseinrichtung nach einem der Ansprüche 13 bis 15, **dadurch gekennzeichnet, dass** die Magnetisierungseinrichtung (15) in einer Transportstrecke (2) einer Transporteinrichtung (1) in Form eines Langsgatorlinearmotors integriert ist, wobei an der Transportstrecke (2) eine Mehrzahl von Antriebsspulen (3) in Längsrichtung hintereinander angeordnet ist und dass zumindest eine der Antriebsspulen (3) der Transportstrecke (2) als Magnetisierungsspule (17) der Magnetisierungseinheit (16) ausgebildet ist oder dass die Magnetisierungseinrichtung (15) parallel zu einer Transportstrecke (2) einer Transporteinrichtung (1) in Form eines Langsgatorlinearmotors angeordnet ist, wobei die Magnetisierungseinrichtung (15) ortsfest oder relativ zur Transportstrecke (2) bewegbar ist, um die magnetischen Eigenschaften zumindest eines Permanentmagneten (6) der Transporteinheit (TEi) im Stillstand oder während der Bewegung der Transporteinheit (TEi) zu verändern.

17. Verfahren zum Betreiben einer Transporteinrichtung (1) in Form eines Langstatorlinearmotors mit einer Transportstrecke (2) mit einer Mehrzahl von in Längsrichtung hintereinander angeordneten Antriebsspulen (3) und mit einer Mehrzahl von Transporteinheiten (TEi) mit einer Mehrzahl in Längsrichtung in einer bestimmten Polteilung (TP) hintereinander angeordneten Magnetpolen (5) mit jeweils zumindest einem Permanentmagnet (6), die mit den Antriebsspulen (3) elektromagnetisch zusammenwirkt, um die Transporteinheit (TEi) entlang der Transportstrecke (2) zu bewegen, **dadurch gekennzeichnet, dass** zumindest zwei Transporteinheiten (TEi) in der Transporteinrichtung (1) verwendet werden, deren Magnetpole (5) eine unterschiedliche Polteilung (TP) aufweisen.

18. Verfahren nach Anspruch 17, **dadurch gekennzeichnet, dass** an zumindest einer Transporteinheit (TEi) die Polteilung (TP) und/oder eine Anzahl (j) der Magnetpole (5) und/oder eine Polbreite (b) der Magnetpole (5) während der Bewegung der Transporteinheit (TEi) entlang der Transportstrecke (2) und/oder im Stillstand verändert wird.

**Geänderte Patentansprüche gemäss Regel 137(2) EPÜ.**

1. Transporteinrichtung (1) in Form eines Langstatorlinearmotors mit einer Transportstrecke (2), entlang der zumindest zwei Transporteinheiten (TEi) in Längsrichtung bewegbar sind, wobei an der Transportstrecke (2) eine Mehrzahl von Antriebsspulen (3) in Längsrichtung hintereinander angeordnet ist und an den Transporteinheiten (TEi) jeweils eine Mehrzahl von Magnetpole (5) in Längsrichtung mit einer bestimmten Polteilung (TP) hintereinander angeordnet ist, die mit den Antriebsspulen (3) elektromagnetisch zusammenwirkt, um die Transporteinheiten (TEi) zu bewegen, wobei jeder Magnetpol (5) zumindest einen Permanentmagnet (6) aufweist, **dadurch gekennzeichnet, dass** die Magnetpole (5) der zumindest zwei Transporteinheiten (TEi) eine unterschiedliche Polteilung (TP) aufweisen.

2. Transporteinrichtung (1) nach Anspruch 1, **dadurch gekennzeichnet, dass** die zumindest zwei Transporteinheiten (TEi) eine unterschiedliche Anzahl (j) von Magnetpolen (5) aufweisen und/oder dass die Magnetpole (5) der zumindest zwei Transporteinheiten (TEi) eine unterschiedliche Polbreite (b) aufweisen.

3. Transporteinrichtung (1) nach Anspruch 1 oder 2, **dadurch gekennzeichnet, dass** an zumindest einer Transporteinheit (TEi) eine Anzahl (j) der Magnetpole (5) und/oder die Polteilung (TP) und/oder eine Polbreite (b) der Magnetpole (5) während der Bewegung der Transporteinheit (TEi) entlang der Transportstrecke (2) und/oder im Stillstand veränderlich ist.

4. Transporteinrichtung (1) nach Anspruch 3, **dadurch gekennzeichnet, dass** zur Veränderung der Anzahl (j) der Magnetpole (5) und/oder der Polteilung (TP) und/oder der Polbreite (b) der Magnetpole (5) zumindest ein Permanentmagnet (6) einer Transporteinheit (TEi) auswechselbar ist.

5. Transporteinrichtung (1) nach Anspruch 3 oder 4, **dadurch gekennzeichnet, dass** zur Veränderung der Anzahl (j) der Magnetpole (5) und/oder der Polteilung (TP) und/oder der Polbreite (b) der Magnetpole (5) eine Magnetisierungseinrichtung (15) in der Transporteinrichtung (1) vorgesehen ist, mittels der magnetische Eigenschaften zumindest eines Permanentmagneten (6) einer Transporteinheit (TEi) veränderbar sind, wobei die Magnetisierungseinrichtung (15) in der Transportstrecke (2) der Transporteinrichtung (1) integriert ist oder parallel zur Transportstrecke (2) angeordnet ist.

6. Transporteinrichtung (1) nach Anspruch 5, **dadurch gekennzeichnet, dass** die Magnetisierungseinrichtung (15) eine Magnetisierungseinheit (16) und eine Magnetisierungssteuereinheit (18) aufweist, wobei die Magnetisierungseinheit (16) vorgesehen ist, ein magnetisches Feld zu erzeugen, um magnetische Eigenschaften zumindest eines Permanentmagneten (6) der Transporteinheit (TEi) zu verändern, um die Polteilung (TP) der Magnetpole (5) zu verändern und dass die Magnetisierungssteuereinheit (18) zur Ansteuerung der Magnetisierungseinheit (16) vorgesehen ist.

7. Transporteinrichtung (1) nach Anspruch 6, **dadurch gekennzeichnet, dass** die Magnetisierungseinheit (16) vorgesehen ist, ein magnetisches Feld zu erzeugen, um magnetische Eigenschaften zumindest eines Permanentmagneten (6) der Transporteinheit (TEi) zu verändern, um eine Anzahl (j) der Magnetpole (5) und/oder eine Polbreite (b) zu verändern.

8. Transporteinrichtung (1) nach Anspruch 6 oder 7, **dadurch gekennzeichnet, dass** die Magnetisierungseinheit (16) zur Erzeugung des magnetischen Feldes zumindest eine Magnetisierungsspule (17) aufweist, wobei die zumindest eine Magnetisierungsspule (17) vorzugsweise eine Magnetisierungsspulenbreite ($b_M$) aufweist, die einer Magnetbreite (m) eines Permanentmagnet (6) der Transporteinheit (TEi) oder einem ganzzahligen Vielfachen der Magnetbreite (m) eines Permanentmagnet (6) der Transporteinheit (TEi) entspricht.

9. Transporteinrichtung (1) nach einem der Ansprüche 6 bis 8, **dadurch gekennzeichnet, dass** die Magnetisierungseinrichtung (15) in der Transportstrecke (2) integriert ist, wobei zumindest eine der Antriebsspulen (3) der Transportstrecke (2) als Magnetisierungsspule (17) der Magnetisierungseinheit (16) ausgebildet ist **oder dass** die Magnetisierungseinrichtung (15) parallel zur Transportstrecke (2) angeordnet ist, wobei die Magnetisierungseinrichtung (15) ortsfest oder relativ zur Transportstrecke (2) bewegbar ist, um die magnetischen Eigenschaften zumindest eines Permanentmagneten (6) der Transporteinheit (TEi) im Stillstand oder während der Bewegung der Transporteinheit (TEi) zu verändern.

10. Transporteinrichtung (1) nach einem der Ansprüche 3 bis 9, **dadurch gekennzeichnet, dass** zur Veränderung der Polteilung (TP) der Magnetpole (5) einer Transporteinheit (TEi) eine Position zumindest eines Permanentmagnet (6) in Längsrichtung der Transporteinheit (TEi) mittels einer an der Transporteinheit (TEi) angeordneten Verstelleinrichtung (8) veränderbar ist.

11. Transporteinrichtung (1) nach einem der Ansprüche 1 bis 10, **dadurch gekennzeichnet, dass** sich eine Spulenteilung (TS) der Antriebsspulen (3) in Längsrichtung entlang der Transportstrecke (2) von der Polteilung (TP) der Transporteinheiten (TEi) unterscheidet, wobei die Spulenteilung (TS) vorzugsweise über die gesamte Transportstrecke (2) konstant ist.

12. Transporteinheit (TEi) für eine Transporteinrichtung (1) in Form eines Langstatorlinearmotors, mit einer Mehrzahl von in Längsrichtung der Transporteinheit (TEi) in einer bestimmten Polteilung (TP) hintereinander angeordneten Magnetpolen (5), wobei jeder Magnetpol (5) zumindest einen Permanentmagnet (6) aufweist, **dadurch gekennzeichnet, dass** die Polteilung (TP) der Magnetpole (5) der Transporteinheit (TEi) veränderbar ist.

13. Transporteinheit (TEi) nach Anspruch 12 , **dadurch gekennzeichnet, dass** an der Transporteinheit (TEi) eine Verstelleinrichtung (8) vorgesehen ist, mittels der eine Position zumindest eines der Permanentmagnete (6) in Längsrichtung der Transporteinheit (TEi) veränderbar ist, um die Polteilung (TP) der Magnetpole (5) zu verändern.

14. Transporteinheit (TEi) nach Anspruch 13, **dadurch gekennzeichnet, dass** die Verstelleinrichtung (8) mechanisch ausgeführt ist, wobei die Verstelleinrichtung (8) ein Getriebe oder ein Gestänge und/oder zumindest ein Federelement (9) zur Verstellung der Polteilung (TP) aufweist oder dass die Verstelleinrichtung (8) elektromechanisch ausgeführt ist und zumindest ein elektromechanisches Stellglied (10) aufweist, wobei an der Transporteinheit (TEi) eine Steuereinheit (11) zur Ansteuerung des zumindest einen Stellglieds (10) vorgesehen ist, um die Polteilung ($T_P$) zu verändern.

15. Transporteinheit (TEi) nach Anspruch 13 oder 14, **dadurch gekennzeichnet, dass** die Transporteinheit (TEi) eine Auslöseeinheit zur Auslösung der Verstellung der Polteilung ($T_P$) aufweist, wobei die Auslöseeinheit manuell oder von einer Betätigungseinheit einer Transporteinrichtung (1) in Form eines Langstatorlinearmotors betätigbar ist.

16. Transporteinheit (TEi) nach einem der Ansprüche 12 bis 15, **dadurch gekennzeichnet, dass** zur Veränderung der Polteilung (TP) und/oder einer Anzahl (j) der Magnetpole (5) und/oder einer Polbreite (b) der Magnetpole (5) zumindest ein Permanentmagnet (6) der Transporteinheit (TEi) wechselbar ist und/oder dass die magnetischen Eigenschaften zumindest eines Permanentmagneten (6) mittels einer Magnetisierungseinrichtung (15) veränderbar ist.

17. Verfahren zum Betreiben einer Transporteinrichtung (1) in Form eines Langstatorlinearmotors mit einer Transportstrecke (2) mit einer Mehrzahl von in Längsrichtung hintereinander angeordneten Antriebsspulen (3) und mit einer Mehrzahl von Transporteinheiten (TEi) mit einer Mehrzahl in Längsrichtung in einer bestimmten Polteilung (TP) hintereinander angeordneten Magnetpolen (5) mit jeweils zumindest einem Permanentmagnet (6), die mit den Antriebsspulen (3) elektromagnetisch zusammenwirkt, um die Transporteinheit (TEi) entlang der Transportstrecke (2) zu bewegen, **dadurch gekennzeichnet, dass** zumindest zwei Transporteinheiten (TEi) in der Transporteinrichtung (1) verwendet werden, deren Magnetpole (5) eine unterschiedliche Polteilung (TP) aufweisen.

**18.** Verfahren nach Anspruch 17, **dadurch gekennzeichnet, dass** an zumindest einer Transporteinheit (TEi) die Polteilung (TP) und/oder eine Anzahl (j) der Magnetpole (5) und/oder eine Polbreite (b) der Magnetpole (5) während der Bewegung der Transporteinheit (TEi) entlang der Transportstrecke (2) und/oder im Stillstand verändert wird.

Fig. 1

Fig. 2a

Fig. 2b

EP 3 661 033 A1

Fig. 3a

Fig. 3b

Fig. 3c

Fig. 3d

Fig. 4

Europäisches
Patentamt

European
Patent Office

Office européen
des brevets

**EUROPÄISCHER RECHERCHENBERICHT**

Nummer der Anmeldung

EP 18 20 8683

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | US 6 876 107 B2 (JACOBS AUTOMATION [US]) 5. April 2005 (2005-04-05) * Abbildungen 1, 2, 4 * | 1-18 | INV. H02K41/03 B60L13/03 B65G49/08 |
| X | DE 10 2016 218777 A1 (BOSCH GMBH ROBERT [DE]) 24. Mai 2017 (2017-05-24) | 13-15 | B65G54/02 B65G1/00 |
| A | * Anspruch 14 * | 16 | |
| X | US 5 952 742 A (STOIBER DIETMAR [DE] ET AL) 14. September 1999 (1999-09-14) | 13-15 | ADD. H02K15/00 H02K15/03 |
| A | * Spalte 1, Zeilen 1-20 * | 16 | |
| A | KR 101 683 870 B1 (DCT CO LTD [KR]) 9. Dezember 2016 (2016-12-09) * Abbildung 1 * | 1 | |
| A | EP 3 202 612 A1 (BERNECKER+RAINER INDUSTRIE-ELEKTRONIK GES MBH [AT]) 9. August 2017 (2017-08-09) * Abbildung 1 * | 1 | |

RECHERCHIERTE SACHGEBIETE (IPC)

H02K
B65G
B60L

Der vorliegende Recherchenbericht wurde für alle Patentansprüche erstellt

| Recherchenort | Abschlußdatum der Recherche | Prüfer |
|---|---|---|
| Den Haag | 29. April 2019 | Van de Maele, Wim |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................................
& : Mitglied der gleichen Patentfamilie, übereinstimmendes Dokument

EPO FORM 1503 03.82 (P04C03)

# EP 3 661 033 A1

## ANHANG ZUM EUROPÄISCHEN RECHERCHENBERICHT
## ÜBER DIE EUROPÄISCHE PATENTANMELDUNG NR.

EP 18 20 8683

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-04-2019

| Im Recherchenbericht angeführtes Patentdokument | Datum der Veröffentlichung | Mitglied(er) der Patentfamilie | Datum der Veröffentlichung |
|---|---|---|---|
| US 6876107 B2 | 05-04-2005 | AU 2003248622 A1<br>EP 1547230 A1<br>EP 2747257 A2<br>US 2003230941 A1<br>WO 03105324 A1 | 22-12-2003<br>29-06-2005<br>25-06-2014<br>18-12-2003<br>18-12-2003 |
| DE 102016218777 A1 | 24-05-2017 | KEINE | |
| US 5952742 A | 14-09-1999 | DE 19503511 A1<br>DE 29520879 U1<br>EP 0754366 A1<br>JP H09511380 A<br>US 5952742 A<br>WO 9624189 A1 | 08-08-1996<br>11-04-1996<br>22-01-1997<br>11-11-1997<br>14-09-1999<br>08-08-1996 |
| KR 101683870 B1 | 09-12-2016 | KEINE | |
| EP 3202612 A1 | 09-08-2017 | AT 518354 A1<br>CA 2956747 A1<br>EP 3202612 A1<br>US 2017217460 A1 | 15-09-2017<br>02-08-2017<br>09-08-2017<br>03-08-2017 |

Für nähere Einzelheiten zu diesem Anhang : siehe Amtsblatt des Europäischen Patentamts, Nr.12/82

EPO FORM P0461

22

**IN DER BESCHREIBUNG AUFGEFÜHRTE DOKUMENTE**

**In der Beschreibung aufgeführte Patentdokumente**

- WO 2013143783 A1
- US 6876107 B2
- US 20130074724 A1
- WO 2004103792 A1
- US 8427015 B2
- US 8674561 B2